# EUROPEAN PATENT APPLICATION

(11) **EP 4 603 495 A1**
(43) Date of publication of application: **20.08.2025**
(21) Application number: 23876726.3
(22) Date of filing: 11.10.2023
(51) Int. Cl.: C07F 17/00, C08F 10/00, C08F 4/64, C07F 9/535, C08F 110/02, C07F 7/00

(54) **PHOSPHINE-PHENOL HALF-METALLOCENE COMPLEX, AND PREPARATION METHOD THEREFOR AND USE THEREOF**

(30) Priority: 11.10.2022 CN 202211238757
(71) Applicant: CHINA PETROLEUM & CHEMICAL CORPORATION, Chaoyang District Beijing 100728 (CN); Sinopec (Beijing) Research Institute of Chemical Industry Co., Ltd., Beijing 100013 (CN)
(72) Inventor: GAO, Rong, Beijing 100013 (CN); GOU, Qingqiang, Beijing 100013 (CN); LAI, Jingjing, Beijing 100013 (CN); ZHANG, Randi, Beijing 100013 (CN); ZHENG, Gang, Beijing 100013 (CN); FAN, Guoqiang, Beijing 100013 (CN); WANG, Ying, Beijing 100013 (CN); AN, Jingyan, Beijing 100013 (CN); YUE, Qiang, Beijing 100013 (CN)
(74) Representative: Hoffmann Eitle
(86) International application number: PCT/CN2023/123992
(87) International publication number: WO 2024/078525

(57) **Abstract**

The present invention relates to the technical field of olefin polymerization catalysts, and discloses a phosphine-phenol half-metallocene complex and preparation method therefor and use thereof. The structural formula of the phosphine-phenol half-metallocene complex is shown in formula (I), wherein, M is selected from Group IVB metals; Ar is selected from substituted or unsubstituted C6-C20 aryl; X is selected from halogen, C1-C10 hydrocarbyl, n is 1 or 2; L₁ is selected from substituted or unsubstituted cyclopentadienyl, substituted or unsubstituted indenyl, tetrahydroindenyl, substituted or unsubstituted fluorenyl. In the case where the complex contains the same metal and the polymerization conditions are similar, when the metal complex of the present invention is used as a primary catalyst, a higher polymerization activity is achieved, the obtained polymer has an obviously lower molecular weight distribution than that of a polymer obtained in the Comparative Examples, and also has a more excellent copolymerization performance; and the metal complex of the present invention still maintains a higher polymerization activity at a higher polymerization temperature.

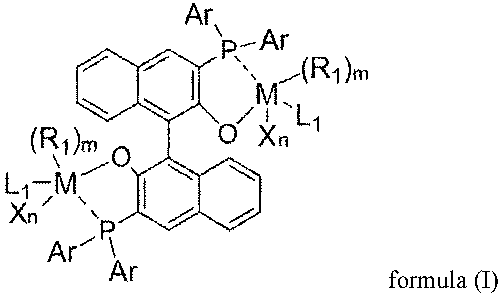

## Description

### Technical field

The present invention relates to the technical field of olefin polymerization catalysts, and particularly relates to a phosphine-phenol half-metallocene complex and preparation method therefor and use thereof.

### Background art

Polyolefin resins have excellent environmental coordination compared with other resin materials, and thus are widely used in industry and life. Polyethylene resin is an important polyolefin resin. Industrialized polyethylene catalysts include Ziegler-Natta type catalysts (see, for example, DE Pat 889229 (1953); IT Pat 545332 (1956) and IT Pat 536899 (1955); Chem. Rev., 2000, 100, 1169 and related literatures of the Special Edition), Phillips type catalysts (see, for example, Belg. Pat. 530617 (1955); Chem. Rev. 1996, 96, 3327) and metallocene catalysts (see, for example, W. Kaminsky, Metalorganic Catalysts for Synthesis and Polymerization, Berlin: Springer, 1999), as well as the late transition metal complexes-type highly efficient ethylene oligomerization and polymerization catalysts developed rapidly in recent years. In 2006, the Gibson group of British scientists discovered that Group IV phenol-phosphine zirconium complex has good catalytic ability for olefin polymerization, and can effectively carry out ethylene or propylene polymerization reaction under the activation of cocatalyst such as methylaluminoxane (MAO) (Inorg. chem, 2006, 45, 511-513, Organometallics 2008, 27, 235-245).

At present, there is an urgent need for high-performance olefin polymerization catalysts in the production of high-end polyolefins. Therefore, the development of new catalysts with good catalytic activity is of great significance.

### Contents of the invention

An object of the present invention is to provide a phosphine-phenol half-metallocene complex and preparation method therefor and use thereof, wherein the phosphine-phenol half-metallocene complex has good thermal stability, particularly, the metal complex can still maintain a higher ethylene polymerization activity at a higher temperature, and the obtained polymer has a narrower molecular weight distribution.

In order to achieve the above object, in a first aspect, the present invention provides a phosphine-phenol half-metallocene complex, the structural formula of which is shown in formula (I), 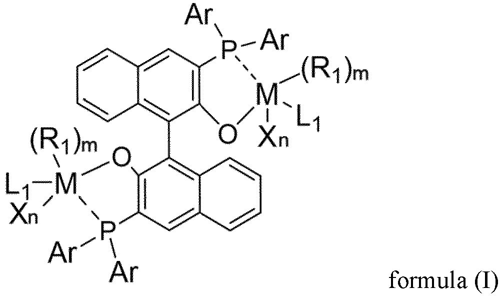 wherein, M is selected from Group IVB metals; Ar is selected from substituted or unsubstituted C6-C20 aryl; X is selected from halogen, C1-C10 hydrocarbyl, n is 1 or 2; L₁ is selected from substituted or unsubstituted cyclopentadienyl, substituted or unsubstituted indenyl, tetrahydroindenyl, substituted or unsubstituted fluorenyl; R₁ is OR₂₁R₂₂, wherein R₂₁ and R₂₂ are each independently selected from substituted or unsubstituted C1-C10 hydrocarbyl, and R₂₁, R₂₂ and O are interconnected to form a ring or ring system, m is 0 or 1.

Preferably, C6-C20 aryl (including C6-C15 aryl) is selected from phenyl, 4-methyl phenyl, 4-ethyl phenyl, dimethyl phenyl, vinyl phenyl, anthryl, naphthyl, or biphenyl.

Preferably, for substituted C6-C20 aryl, the substituent thereof is selected from H, halogen, hydroxy, substituted or unsubstituted alkoxy (preferably C1-C6 alkoxy, more preferably methoxy, ethoxy or propoxy), substituted or unsubstituted C1-C20 hydrocarbyl.

Preferably, for substituted alkoxy and substituted C1-C20 hydrocarbyl, the substituents thereof are selected from halogen, hydroxy, C1-C6 alkyl, halo-substituted C1-C6 alkyl, C1-C6 alkoxy and halo-substituted C1-C6 alkoxy.

Preferably, the halo is selected from fluoro, chloro, bromo, or iodo.

Preferably, the halo includes monohalo, dihalo or perhalo, such as monofluoro, difluoro or perfluoro.

Preferably, for substituted cyclopentadienyl, substituted indenyl, substituted fluorenyl, the substituents are independently selected from C1-C6 alkyl (such as methyl, ethyl, propyl, butyl and the like) or C6-C15 aryl (such as phenyl, phenylmethyl, phenylethyl and the like).

Preferably, C1-C10 hydrocarbyl includes C1-C8 hydrocarbyl (such as C1-C6 alkyl) or C6-C10 aralkyl, the aralkyl including, but not limited to: phenylmethyl, phenylethyl, phenyl n-propyl, phenyl isopropyl, phenyl n-butyl and phenyl tert-butyl.

Preferably, C1-C20 hydrocarbyl includes C1-C8 hydrocarbyl (such as C1-C6 alkyl), preferably methyl, ethyl or propyl; or C6-C15 aryl, preferably phenyl.

Preferably, the C1-C6 alkyl is selected from methyl, ethyl, n-propyl, isopropyl, n-butyl, isobutyl, n-pentyl, isopentyl, n-hexyl, isohexyl and 3,3-dimethyl butyl.

Preferably, the C1-C6 alkoxy is selected from methoxy, ethoxy, n-propoxy, isopropoxy, n-butoxy, isobutoxy, n-pentyloxy, isopentyloxy, n-hexyloxy, isohexyloxy and 3,3-dimethyl butoxy.

Preferably, the halogen is selected from fluorine, chlorine, bromine and iodine.

In the present application, unless otherwise specified, the situation of substitution includes mono-and poly-substitution.

Unless otherwise specified, the above definitions of groups also apply to the definitions of groups in other preferred or related structures described in the context.

Preferably, the structural formula of the phosphine-phenol half-metallocene complex is shown in formula (II), 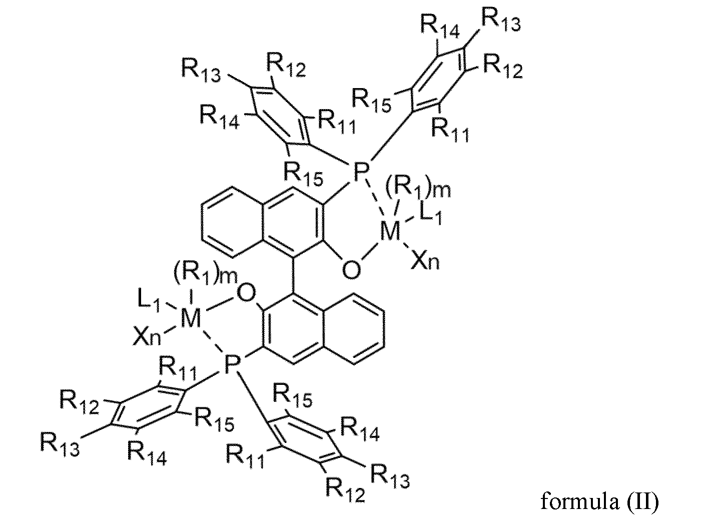 wherein, R₁₁-R₁₅ are each independently selected from H, halogen, hydroxy, substituted or unsubstituted alkoxy or substituted or unsubstituted C1-C20 hydrocarbyl. Preferably, for substituted alkoxy and substituted C1-C20 hydrocarbyl, the substituents thereof are selected from halogen, hydroxy, C1-C6 alkyl, halo-substituted C1-C6 alkyl, C1-C6 alkoxy and halo-substituted C1-C6 alkoxy. Preferably, M is selected from titanium, zirconium and hafnium.

Preferably, R₂₁ and R₂₂ are each independently selected from substituted or unsubstituted C1-C6 hydrocarbyl, and R₂₁, R₂₂ and O are interconnected to form a five- or six-membered ring.

Preferably, R₁₁-R₁₅ are each independently selected from H, halogen, hydroxy, substituted or unsubstituted alkoxy, substituted or unsubstituted C1-C10 alkyl and substituted or unsubstituted C6-C15 aryl; X is selected from halogen, C1-C8 hydrocarbyl.

Preferably, C6-C15 aryl is selected from phenyl, 4-methyl phenyl, 4-ethyl phenyl, dimethyl phenyl, vinyl phenyl, anthryl, naphthyl, or biphenyl.

Preferably, for substituted alkoxy, substituted C1-C10 alkyl and substituted C6-C15 aryl, the substituents are independently selected from halogen, hydroxy, C1-C6 alkyl, halo-substituted C1-C6 alkyl, C1-C6 alkoxy and halo-substituted C1-C6 alkoxy.

Preferably, the halo is selected from fluoro, chloro, bromo, or iodo.

Preferably, the halo includes monohalo, dihalo or perhalo.

Preferably, the C1-C6 alkyl is selected from methyl, ethyl, n-propyl, isopropyl, n-butyl, isobutyl, n-pentyl, isopentyl, n-hexyl, isohexyl and 3,3-dimethyl butyl.

Preferably, the C1-C6 alkoxy is selected from methoxy, ethoxy, n-propoxy, isopropoxy, n-butoxy, isobutoxy, n-pentyloxy, isopentyloxy, n-hexyloxy, isohexyloxy and 3,3-dimethyl butoxy.

Preferably, the halogen is selected from fluorine, chlorine, bromine and iodine.

In a second aspect, the present invention provides a method for preparing the above-mentioned phosphine-phenol half-metallocene complex, the method comprising:
(1) reacting a compound of formula (III) with a compound of formula (IV), to obtain a ligand of formula (V);
(2) reacting the ligand with a hydrogen abstracting agent, and then reacting with an M metal compound, wherein, the metal M in the M metal compound is selected from Group IVB metals, the M metal compound contains at least one of substituted or unsubstituted cyclopentadienyl, substituted or unsubstituted indenyl, tetrahydroindenyl and substituted or unsubstituted fluorenyl; 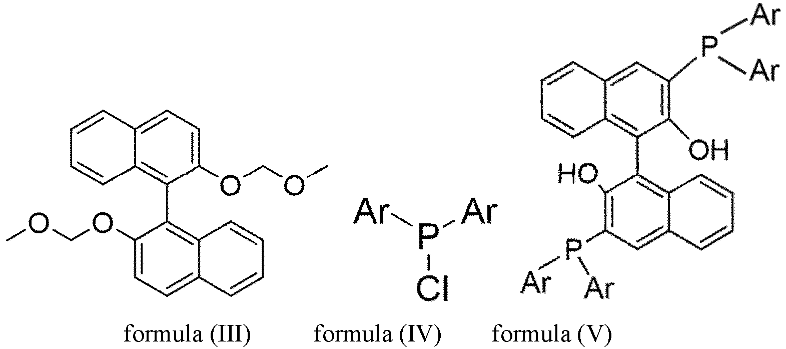 wherein, the definition of Ar is the same as described above.

Preferably, the M metal compound is selected from at least one of cyclopentadienyl titanium trichloride, pentamethyl cyclopentadienyl titanium trichloride, methyl-cyclopentadienyl titanium trichloride, n-butyl-cyclopentadienyl titanium trichloride, tert-butyl-cyclopentadienyl titanium trichloride, indenyl titanium trichloride, fluorenyl titanium trichloride, butyl-indenyl-titanium trichloride, 1-methyl-indenyl titanium trichloride, 2-methyl-indenyl titanium trichloride, 1-phenyl-indenyl-titanium trichloride, cyclopentadienyl zirconium trichloride, pentamethyl cyclopentadienyl zirconium trichloride, methyl-cyclopentadienyl zirconium trichloride, 1,3-dimethyl-cyclopentadienyl-zirconium trichloride, 1,2,4-trimethyl-cyclopentadienyl-zirconium trichloride, n-butyl-cyclopentadienyl zirconium trichloride, tert-butyl-cyclopentadienyl zirconium trichloride, indenyl zirconium trichloride, fluorenyl zirconium trichloride, butyl-indenyl-zirconium trichloride, 1-methyl-indenyl zirconium trichloride, 2-methyl-indenyl zirconium trichloride, 1-phenyl-indenyl-zirconium trichloride, cyclopentadienyl-1,2-dimethoxy-ethyl-zirconium trichloride, cyclopentadienyl hafnium trichloride, pentamethyl cyclopentadienyl hafnium trichloride, methyl-cyclopentadienyl hafnium trichloride, 1,2,3,4-tetramethyl-cyclopentadienyl-hafnium trichloride, n-butyl-cyclopentadienyl hafnium trichloride, tert-butyl-cyclopentadienyl hafnium trichloride, isobutyl-cyclopentadienyl hafnium trichloride, indenyl hafnium trichloride, fluorenyl hafnium trichloride, trihydro-indenyl-hafnium trichloride and cyclopentadienyl-1,2-dimethoxy-ethyl-hafnium trichloride.

Preferably, the hydrogen abstracting agent is selected from at least one of NaH, KH, n-butyl lithium and methyl lithium.

In a third aspect, the present invention provides use of the above-mentioned phosphine-phenol half-metallocene complex in olefin polymerization.

In a fourth aspect, the present invention provides an olefin polymerization catalyst, comprising the above-mentioned phosphine-phenol half-metallocene complex and a cocatalyst.

Preferably, the cocatalyst is organoaluminum compound and/or organoboron compound.

Preferably, the organoaluminum compound is selected from one or more of alkylaluminoxane, alkyl aluminum and alkyl aluminum halide.

Preferably, the organoboron compound is selected from one or more of organoboron and organoborate.

In a fifth aspect, the present invention provides an olefin polymerization method, comprising carrying out olefin polymerization reaction in the presence of the above-mentioned olefin polymerization catalyst.

Preferably, the olefin polymerization reaction has a temperature of -78C~200°C, preferably -20°C~150°C, and a pressure of 0.01~10MPa, preferably 0.01~5MPa.

The phosphine-phenol half-metallocene complex, when used as a primary catalyst of an olefin polymerization catalyst, can achieve higher activity in catalyzing olefin polymerization. The obtained polymer has a higher molecular weight, a narrower molecular weight distribution, and excellent copolymerization properties.

Compared with the prior arts, the technical solution of the present invention has the following advantages:
(1) The presently described synthesis method of the phosphine-phenol half-metallocene complex is simple and easy to perform.
(2) The presently described phosphine-phenol half-metallocene complex can catalyze the polymerization of olefins (especially ethylene) with high activity, especially maintaining a higher polymerization activity at a higher polymerization temperature.
(3) The presently described phosphine-phenol half-metallocene complex as a primary catalyst exhibits higher performance for copolymerization of ethylene with α-olefins or cycloolefins (such as norbornene).

### Detailed description of specific embodiments

The specific embodiments of the present invention are described in detail below. It should be understood that the specific embodiments described herein are only for illustrating and explaining the present invention, and are not intended to limit the present invention.

The endpoints of the ranges and any values disclosed herein are not limited to the exact ranges or values, and these ranges or values should be understood to encompass values close to these ranges or values. For numerical ranges, the value between the endpoint values of each range, the value between the endpoint values of each range and individual point values, and the value between individual point values can be combined with each other to obtain one or more new numerical ranges, which should be considered as having been specifically disclosed herein.

The structural formula of the phosphine-phenol half-metallocene complex according to the present invention is shown in formula (I), 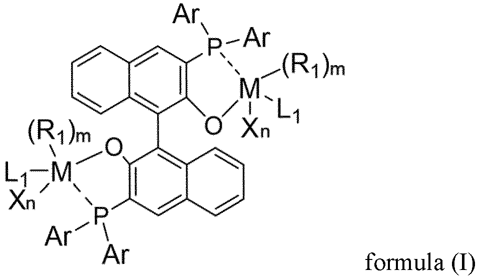 wherein, Ar is selected from substituted or unsubstituted C6-C20 aryl, preferably substituted or unsubstituted C6-C15 aryl, more preferably substituted or unsubstituted C6-C8 aryl.

In a preferred case, the structural formula of the phosphine-phenol half-metallocene complex is shown in formula (II), 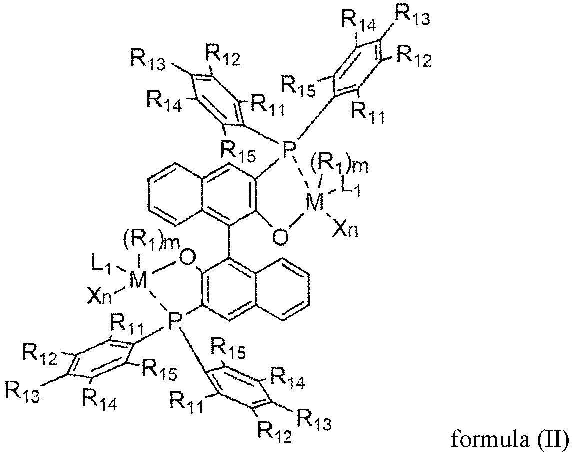 wherein, R₁₁-R₁₅ are each independently selected from H, halogen, hydroxy, substituted or unsubstituted alkoxy or substituted or unsubstituted C1-C20 hydrocarbyl. In a preferred case, R₁₁-R₁₅ are each independently selected from H, halogen, hydroxy, substituted or unsubstituted C1-C6 alkoxy or substituted or unsubstituted C1-C10 alkyl and substituted or unsubstituted C6-C15 aryl.

In formula (I) and formula (II), M is selected from Group IVB metals. In a preferred case, M is selected from titanium, zirconium and hafnium.

In formula (I) and formula (II), X is selected from halogen, C1-C10 hydrocarbyl. In a preferred case, X is selected from halogen, C1-C8 hydrocarbyl (such as C1-C6 alkyl).

In formula (I) and formula (II), n is 1 or 2, the number of X groups linked to the metal M being n. In a preferred case, n is 1.

In formula (I) and formula (II), L₁ is selected from substituted or unsubstituted cyclopentadienyl, substituted or unsubstituted indenyl, tetrahydroindenyl, substituted or unsubstituted fluorenyl. In a preferred case, group L₁ is selected from cyclopentadienyl, methyl-cyclopentadienyl, 1,3-dimethyl-cyclopentadienyl, 1,2,4-trimethyl-cyclopentadienyl, 1,2,3,4-tetramethyl-cyclopentadienyl, pentamethyl cyclopentadienyl, n-butyl-cyclopentadienyl, tert-butyl-cyclopentadienyl, isobutyl-cyclopentadienyl, indenyl, butyl-indenyl, 1-methyl-indenyl, 2-methyl-indenyl, 1-phenyl-indenyl, trihydro-indenyl and fluorenyl.

In formula (I) and formula (II), R₁ is OR₂₁R₂₂, wherein R₂₁ and R₂₂ are each independently selected from substituted or unsubstituted C1-C10 hydrocarbyl, and R₂₁, R₂₂ and O are interconnected to form a ring or ring system. In a preferred case, R₂₁ and R₂₂ are each independently selected from substituted or unsubstituted C1-C6 hydrocarbyl, and R₂₁, R₂₂ and O are interconnected to form a five- or six-membered ring. In a further preferred case, R₁ is tetrahydrofuranyl (C₄H₈O), 2-methyl tetrahydrofuranyl, 3-methyl tetrahydrofuranyl, 2,5-dimethyl tetrahydrofuranyl, 2,2-dimethyl tetrahydrofuranyl and the like.

In formula (I) and formula (II), m may be 0 or 1. When m is 0, it means that group R₁ is absent.

In the present invention, the term "substituted" in the expression "substituted or unsubstituted" refers to containing substituent(s), and the substituent(s) herein may be independently selected from halogen, hydroxy, C1-C6 alkyl, halo-substituted C1-C6 alkyl, C1-C6 alkoxy and halo-substituted C1-C6 alkoxy. Preferably, the halo is selected from fluoro, chloro, bromo, or iodo.

In the present invention, alkyl (such as C1-C6 alkyl or C1-C10 alkyl) may be independently selected from methyl, ethyl, n-propyl, isopropyl, n-butyl, isobutyl, n-pentyl, isopentyl, n-hexyl, isohexyl and 3,3-dimethyl butyl.

In the present invention, alkoxy (such as C1-C6 alkoxy) may be independently selected from methoxy, ethoxy, n-propoxy, isopropoxy, n-butoxy, isobutoxy, n-pentyloxy, isopentyloxy, n-hexyloxy, isohexyloxy and 3,3-dimethyl butoxy.

In the present invention, aryl (such as C6-C8 aryl, C6-C15 aryl or C6-C20 aryl) may be independently selected from phenyl, 4-methyl phenyl, 4-ethyl phenyl, dimethyl phenyl, vinyl phenyl, anthryl, naphthyl, or biphenyl and the like.

In the present invention, the halogen is independently selected from fluorine, chlorine, bromine and iodine.

In a further preferred embodiment, the phosphine-phenol half-metallocene complex is selected from a group consisting of the following complexes,
complex 1: complex of formula (II), wherein M is Ti, L₁ is cyclopentadienyl, R₁₁-R₁₅ are H, X is Cl, n=2, m=0;
complex 2: complex of formula (II), wherein M is Ti, L₁ is pentamethyl cyclopentadienyl, R₁₁-R₁₅ are H, X is Cl, n=2, m=0;
complex 3: complex of formula (II), wherein M is Ti, L₁ is 1-methyl-2,4-cyclopentadienyl, R₁₁-R₁₅ are H, X is Cl, n=2, m=0;
complex 4: complex of formula (II), wherein M is Ti, L₁ is 1-n-butyl-2,4-cyclopentadienyl, R₁₁-R₁₅ are H, X is Cl, n=2, m=0;
complex 5: complex of formula (II), wherein M is Ti, L₁ is 1-tert-butyl-2,4-cyclopentadienyl, R₁₁-R₁₅ are H, X is Cl, n=2, m=0;
complex 6: complex of formula (II), wherein M is Ti, L₁ is indenyl, R₁₁-R₁₅ are H, X is Cl, n=2, m=0;
complex 7: complex of formula (II), wherein M is Ti, L₁ is tetrahydroindenyl, R₁₁-R₁₅ are H, X is Cl, n=2, m=0;
complex 8: complex of formula (II), wherein M is Ti, L₁ is fluorenyl, R₁₁-R₁₅ are H, X is Cl, n=2, m=0;
complex 9: complex of formula (II), wherein M is Ti, L₁ is phenyl-indenyl, R₁₁-R₁₅ are H, X is Cl, n=2, m=0;
complex 10: complex of formula (II), wherein M is Ti, L₁ is cyclopentadienyl, R₁₁-R₁₅ are H, X is methyl, n=2, m=0;
complex 11: complex of formula (II), wherein M is Ti, L₁ is pentamethyl cyclopentadienyl, R₁₁-R₁₅ are H, X is methyl, n=2, m=0;
complex 12: complex of formula (II), wherein M is Ti, L₁=1-methyl-2,4-cyclopentadienyl, R₁₁-R₁₅ are H, X is methyl, n=2, m=0;
complex 13: complex of formula (II), wherein M is Ti, L₁ is 1-n-butyl-2,4-cyclopentadienyl, R₁₁-R₁₅ are H, X is methyl, n=2, m=0;
complex 14: complex of formula (II), wherein M is Ti, L₁ is 1-tert-butyl-2,4-cyclopentadienyl, R₁₁-R₁₅ are H, X is methyl, n=2, m=0;
complex 15: complex of formula (II), wherein M is Ti, L₁ is indenyl, R₁₁-R₁₅ are H, X is methyl, n=2, m=0;
complex 16: complex of formula (II), wherein M is Ti, L₁ is tetrahydroindenyl, R₁₁-R₁₅ are H, X is methyl, n=2, m=0;
complex 17: complex of formula (II), wherein M is Ti, L₁ is fluorenyl, R₁₁-R₁₅ are H, X is methyl, n=2, m=0;
complex 18: complex of formula (II), wherein M is Ti, L₁ is phenyl-indenyl, R₁₁-R₁₅ are H, X is methyl, n=2, m=0;
complex 19: complex of formula (II), wherein M is Ti, L₁ is cyclopentadienyl, R₁₁-R₁₅ are H, X is -CH₂C₆H₅, n=2, m=0;
complex 20: complex of formula (II), wherein M is Ti, L₁ is pentamethyl cyclopentadienyl, R₁₁-R₁₅ are H, X is -CH₂C₆H₅, n=2, m=0;
complex 21: complex of formula (II), wherein M is Ti, L₁ is 1-methyl-2,4-cyclopentadienyl, R₁₁-R₁₅ are H, X is -CH₂C₆H₅, n=2, m=0;
complex 22: complex of formula (II), wherein M is Ti, L₁ is 1-n-butyl-2,4-cyclopentadienyl, R₁₁-R₁₅ are H, X is -CH₂C₆H₅, n=2, m=0;
complex 23: complex of formula (II), wherein M is Ti, L₁ is 1-tert-butyl-2,4-cyclopentadienyl, R₁₁-R₁₅ are H, X is -CH₂C₆H₅, n=2, m=0;
complex 24: complex of formula (II), wherein M is Ti, L₁ is indenyl, R₁₁-R₁₅ are H, X is -CH₂C₆H₅, n=2, m=0;
complex 25: complex of formula (II), wherein M is Ti, L₁ is tetrahydroindenyl, R₁₁-R₁₅ are H, X is -CH₂C₆H₅, n=2, m=0;
complex 26: complex of formula (II), wherein M is Ti, L₁ is fluorenyl, R₁₁-R₁₅ are H, X is - CH₂C₆H₅, n=2, m=0;
complex 27: complex of formula (II), wherein M is Ti, L₁ is phenyl-indenyl, R₁₁-R₁₅ are H, X is - CH₂C₆H₅, n=2, m=0;
complex 28: complex of formula (II), wherein M is Ti, L₁ is cyclopentadienyl, R₁₁, R₁₂, R₁₄ and R₁₅ are H, R₁₃ is -CF₃, X is Cl, n=2, m=0;
complex 29: complex of formula (II), wherein M is Ti, L₁ is cyclopentadienyl, R₁₁, R₁₃, R₁₄ and R₁₅ are H, R₁₂ is -CF₃, X is Cl, n=2, m=0;
complex 30: complex of formula (II), wherein M is Ti, L₁ is cyclopentadienyl, R₁₁, R₁₂, R₁₄ and R₁₅ are H, R₁₃ is methoxy, X is Cl, n=2, m=0;
complex 31: complex of formula (II), wherein M is Ti, L₁ is cyclopentadienyl, R₁₁, R₁₃ and R₁₅ are H, R₁₂ and R₁₄ are methyl, X is Cl, n=2, m=0;
complex 32: complex of formula (II), wherein M is Ti, L₁ is pentamethyl cyclopentadienyl, R₁₁, R₁₂, R₁₄ and R₁₅ are H, R₁₃ is -CF₃, X is Cl, n=2, m=0;
complex 33: complex of formula (II), wherein M is Ti, L₁ is pentamethyl cyclopentadienyl, R₁₁, R₁₃ and R₁₅ are H, R₁₂ and R₁₄ are -CF₃, X is Cl, n=2, m=0;
complex 34: complex of formula (II), wherein M is Ti, L₁ is pentamethyl cyclopentadienyl, R₁₁, R₁₂, R₁₄ and R₁₅ are H, R₁₃ is methoxy, X is Cl, n=2, m=0;
complex 35: complex of formula (II), wherein M is Ti, L₁ is indenyl, R₁₁, R₁₂, R₁₄ and R₁₅ are H, R₁₃ is -CF₃, X is Cl, n=2, m=0;
complex 36: complex of formula (II), wherein M is Ti, L₁ is indenyl, R₁₁, R₁₃ and R₁₅ are H, R₁₂ and R₁₄ are -CF₃, X is Cl, n=2, m=0;
complex 37: complex of formula (II), wherein M is Ti, L₁ is indenyl, R₁₁, R₁₂, R₁₄ and R₁₅ are H, R₁₃ is methoxy, X is Cl, n=2, m=0;
complex 38: complex of formula (II), wherein M is Ti, L₁ is indenyl, R₁₁, R₁₃ and R₁₅ are H, R₁₂ and R₁₄ are methyl, X is Cl, n=2, m=0;
complex 39: complex of formula (II), wherein M is Ti, L₁ is fluorenyl, R₁₁, R₁₂, R₁₄ and R₁₅ are H, R₁₃ is -CF₃, X is Cl, n=2, m=0;
complex 40: complex of formula (II), wherein M is Ti, L₁ is fluorenyl, R₁₁, R₁₃ and R₁₅ are H, R₁₂ and R₁₄ are -CF₃, X is Cl, n=2, m=0;
complex 41: complex of formula (II), wherein M is Ti, L₁ is fluorenyl, R₁₁, R₁₂, R₁₄ and R₁₅ are H, R₁₃ is methoxy, X is Cl, n=2, m=0;
complex 42: complex of formula (II), wherein M is Zr, L₁ is cyclopentadienyl, R₁₁-R₁₅ are H, X is Cl, n=2, R₁ is tetrahydrofuranyl, m=1;
complex 43: complex of formula (II), wherein M is Zr, L₁ is pentamethyl cyclopentadienyl, R₁₁-R₁₅ are H, X is Cl, n=2, R₁ is tetrahydrofuranyl, m=1;
complex 44: complex of formula (II), wherein M is Zr, L₁ is 1-methyl-2,4-cyclopentadienyl, R₁₁-R₁₅ are H, X is Cl, n=2, R₁ is tetrahydrofuranyl, m=1;
complex 45: complex of formula (II), wherein M is Zr, L₁ is 1-n-butyl-2,4-cyclopentadienyl, R₁₁-R₁₅ are H, X is Cl, n=2, R₁ is tetrahydrofuranyl, m=1;
complex 46: complex of formula (II), wherein M is Zr, L₁ is 1-tert-butyl-2,4-cyclopentadienyl, R₁₁-R₁₅ are H, X is Cl, n=2, R₁ is tetrahydrofuranyl, m=1;
complex 47: complex of formula (II), wherein M is Zr, L₁ is indenyl, R₁₁-R₁₅ are H, X is Cl, n=2, R₁ is tetrahydrofuranyl, m=1;
complex 48: complex of formula (II), wherein M is Zr, L₁ is tetrahydroindenyl, R₁₁-R₁₅ are H, X is Cl, n=2, R₁ is tetrahydrofuranyl, m=1;
complex 49: complex of formula (II), wherein M is Zr, L₁ is fluorenyl, R₁₁-R₁₅ are H, X is Cl, n=2, R₁ is tetrahydrofuranyl, m=1;
complex 50: complex of formula (II), wherein M is Zr, L₁ is phenyl-indenyl, R₁₁-R₁₅ are H, X is Cl, n=2, R₁ is tetrahydrofuranyl, m=1;
complex 51: complex of formula (II), wherein M is Zr, L₁ is cyclopentadienyl, R₁₁-R₁₅ are H, X is methyl, n=2, R₁ is tetrahydrofuranyl, m=1;
complex 52: complex of formula (II), wherein M is Zr, L₁ is pentamethyl cyclopentadienyl, R₁₁-R₁₅ are H, X is methyl, n=2, R₁ is tetrahydrofuranyl, m=1;
complex 53: complex of formula (II), wherein M is Zr, L₁ is 1-methyl-2,4-cyclopentadienyl, R₁₁-R₁₅ are H, X is methyl, n=2, R₁ is tetrahydrofuranyl, m=1;
complex 54: complex of formula (II), wherein M is Zr, L₁ is 1-n-butyl-2,4-cyclopentadienyl, R₁₁-R₁₅ are H, X is methyl, n=2, R₁ is tetrahydrofuranyl, m=1;
complex 55: complex of formula (II), wherein M is Zr, L₁ is 1-tert-butyl-2,4-cyclopentadienyl, R₁₁-R₁₅ are H, X is methyl, n=2, R₁ is tetrahydrofuranyl, m=1;
complex 56: complex of formula (II), wherein M is Zr, L₁ is indenyl, R₁₁-R₁₅ are H, X is methyl, n=2, R₁ is tetrahydrofuranyl, m=1;
complex 57: complex of formula (II), wherein M is Zr, L₁ is tetrahydroindenyl, R₁₁-R₁₅ are H, X is methyl, n=2, R₁ is tetrahydrofuranyl, m=1;
complex 58: complex of formula (II), wherein M is Zr, L₁ is fluorenyl, R₁₁-R₁₅ are H, X is methyl, n=2, R₁ is tetrahydrofuranyl, m=1;
complex 59: complex of formula (II), wherein M is Zr, L₁ is phenyl-indenyl, R₁₁-R₁₅ are H, X is methyl, n=2, R₁ is tetrahydrofuranyl, m=1;
complex 60: complex of formula (II), wherein M is Zr, L₁ is cyclopentadienyl, R₁₁-R₁₅ are H, X is -CH₂C₆H₅, n=2, R₁ is tetrahydrofuranyl, m=1;
complex 61: complex of formula (II), wherein M is Zr, L₁ is pentamethyl cyclopentadienyl, R₁₁-R₁₅ are H, X is -CH₂C₆H₅, n=2, R₁ is tetrahydrofuranyl, m=1;
complex 62: complex of formula (II), wherein M is Zr, L₁ is 1-methyl-2,4-cyclopentadienyl, R₁₁-R₁₅ are H, X is -CH₂C₆H₅, n=2, R₁ is tetrahydrofuranyl, m=1;
complex 63: complex of formula (II), wherein M is Zr, L₁ is 1-n-butyl-2,4-cyclopentadienyl, R₁₁-R₁₅ are H, X is -CH₂C₆H₅, n=2, R₁ is tetrahydrofuranyl, m=1;
complex 64: complex of formula (II), wherein M is Zr, L₁ is 1-tert-butyl-2,4-cyclopentadienyl, R₁₁-R₁₅ are H, X is -CH₂C₆H₅, n=1, R₁ is tetrahydrofuranyl, m=1;
complex 65: complex of formula (II), wherein M is Zr, L₁ is indenyl, R₁₁-R₁₅ are H, X is -CH₂C₆H₅, n=2, R₁ is tetrahydrofuranyl, m=1;
complex 66: complex of formula (II), wherein M is Zr, L₁ is tetrahydroindenyl, R₁₁-R₁₅ are H, X is -CH₂C₆H₅, n=2, R₁ is tetrahydrofuranyl, m=1;
complex 67: complex of formula (II), wherein M is Zr, L₁ is fluorenyl, R₁₁-R₁₅ are H, X is - CH₂C₆H₅, n=2, R₁ is tetrahydrofuranyl, m=1;
complex 68: complex of formula (II), wherein M is Zr, L₁ is phenyl-indenyl, R₁₁-R₁₅ are H, X is - CH₂C₆H₅, n=2, R₁ is tetrahydrofuranyl, m=1;
complex 69: complex of formula (II), wherein M is Zr, L₁ is cyclopentadienyl, R₁₁, R₁₂, R₁₄ and R₁₅ are H, R₁₃ is -CF₃, X is Cl, n=2, R₁ is tetrahydrofuranyl, m=1;
complex 70: complex of formula (II), wherein M is Zr, L₁ is cyclopentadienyl, R₁₁, R₁₃, R₁₄ and R₁₅ are H, R₁₂ is -CF₃, X is Cl, n=2, R₁ is tetrahydrofuranyl, m=1;
complex 71: complex of formula (II), wherein M is Zr, L₁ is pentamethyl cyclopentadienyl, R₁₁, R₁₂, R₁₄ and R₁₅ are H, R₁₃ is methoxy, X is Cl, n=2, R₁ is tetrahydrofuranyl, m=1;
complex 72: complex of formula (II), wherein M is Zr, L₁ is cyclopentadienyl, R₁₁, R₁₂, R₁₄ and R₁₅ are H, R₁₃ is methoxy, X is Cl, n=2, R₁ is tetrahydrofuranyl, m=1;
complex 73: complex of formula (II), wherein M is Zr, L₁ is cyclopentadienyl, R₁₁, R₁₂, R₁₄ and R₁₅ are H, R₁₃ is methoxy, X is methyl, n=2, R₁ is tetrahydrofuranyl, m=1;
complex 74: complex of formula (II), wherein M is Zr, L₁ is cyclopentadienyl, R₁₁, R₁₂, R₁₄ and R₁₅ are H, R₁₃ is methoxy, X is -CH₂C₆H₅, n=2, R₁ is tetrahydrofuranyl, m=1;
complex 75: complex of formula (II), wherein M is Zr, L₁ is pentamethyl cyclopentadienyl, R₁₁, R₁₂, R₁₄ and R₁₅ are H, R₁₃ is -CF₃, X is Cl, n=2, R₁ is tetrahydrofuranyl, m=1;
complex 76: complex of formula (II), wherein M is Zr, L₁ is pentamethyl cyclopentadienyl, R₁₁, R₁₂, R₁₄ and R₁₅ are H, R₁₃ is -CF₃, X is methyl, n=2, R₁ is tetrahydrofuranyl, m=1;
complex 77: complex of formula (II), wherein M is Zr, L₁ is pentamethyl cyclopentadienyl, R₁₁, R₁₂, R₁₄ and R₁₅ are H, R₁₃ is -CF₃, X is -CH₂C₆H₅, n=2, R₁ is tetrahydrofuranyl, m=1;
complex 78: complex of formula (II), wherein M is Zr, L₁ is pentamethyl cyclopentadienyl, R₁₁, R₁₃ and R₁₅ are H, R₁₂ and R₁₄ are -CF₃, X is Cl, n=2, R₁ is tetrahydrofuranyl, m=1;
complex 79: complex of formula (II), wherein M is Zr, L₁ is pentamethyl cyclopentadienyl, R₁₁, R₁₃ and R₁₅ are H, R₁₂ and R₁₄ are methyl, X is Cl, n=2, R₁ is tetrahydrofuranyl, m=1;
complex 80: complex of formula (II), wherein M is Zr, L₁ is pentamethyl cyclopentadienyl, R₁₁, R₁₃ and R₁₅ are H, R₁₂ and R₁₄ are -CF₃, X is methyl, n=2, R₁ is tetrahydrofuranyl, m=1;
complex 81: complex of formula (II), wherein M is Zr, L₁ is pentamethyl cyclopentadienyl, R₁₁, R₁₃ and R₁₅ are H, R₁₂ and R₁₄ are -CF₃, X is -CH₂C₆H₅, n=2, R₁ is tetrahydrofuranyl, m=1;
complex 82: complex of formula (II), wherein M is Zr, L₁ is pentamethyl cyclopentadienyl, R₁₁, R₁₂, R₁₄ and R₁₅ are H, R₁₃ is methoxy, X is Cl, n=2, R₁ is 2-methyl tetrahydrofuranyl, m=1;
complex 83: complex of formula (II), wherein M is Zr, L₁ is indenyl, R₁₁, R₁₂, R₁₄ and R₁₅ are H, R₁₃ is -CF₃, X is Cl, n=2, R₁ is tetrahydrofuranyl, m=1;
complex 84: complex of formula (II), wherein M is Zr, L₁ is indenyl, R₁₁, R₁₂, R₁₄ and R₁₅ are H, R₁₃ is -CF₃, X is methyl, n=2, R₁ is tetrahydrofuranyl, m=1;
complex 85: complex of formula (II), wherein M is Zr, L₁ is indenyl, R₁₁, R₁₂, R₁₄ and R₁₅ are H, R₁₃ is -CF₃, X is -CH₂C₆H₅, n=2, R₁ is tetrahydrofuranyl, m=1;
complex 86: complex of formula (II), wherein M is Zr, L₁ is indenyl, R₁₁, R₁₃ and R₁₅ are H, R₁₂ and R₁₄ are -CF₃, X is Cl, n=2, R₁ is tetrahydrofuranyl, m=1;
complex 87: complex of formula (II), wherein M is Zr, L₁ is indenyl, R₁₁, R₁₃ and R₁₅ are H, R₁₂ and R₁₄ are methyl, X is Cl, n=2, R₁ is tetrahydrofuranyl, m=1;
complex 88: complex of formula (II), wherein M is Zr, L₁ is indenyl, R₁₁, R₁₃ and R₁₅ are H, R₁₂ and R₁₄ are -CF₃, X is methyl, n=2, R₁ is tetrahydrofuranyl, m=1;
complex 89: complex of formula (II), wherein M is Zr, L₁ is indenyl, R₁₁, R₁₃ and R₁₅ are H, R₁₂ and R₁₄ are -CF₃, X is -CH₂C₆H₅, n=2, R₁ is tetrahydrofuranyl, m=1;
complex 90: complex of formula (II), wherein M is Zr, L₁ is indenyl, R₁₁, R₁₂, R₁₄ and R₁₅ are H, R₁₃ is methoxy, X is Cl, n=2, R₁ is tetrahydrofuranyl, m=1;
complex 91: complex of formula (II), wherein M is Zr, L₁ is fluorenyl, R₁₁, R₁₂, R₁₄ and R₁₅ are H, R₁₃ is -CF₃, X is Cl, n=2, R₁ is tetrahydrofuranyl, m=1;
complex 92: complex of formula (II), wherein M is Zr, L₁ is fluorenyl, R₁₁, R₁₃ and R₁₅ are H, R₁₂ and R₁₄ are -CF₃, X is Cl, n=2, R₁ is tetrahydrofuranyl, m=1;
complex 93: complex of formula (II), wherein M is Zr, L₁ is fluorenyl, R₁₁, R₁₃ and R₁₅ are H, R₁₂ and R₁₄ are methyl, X is Cl, n=2, R₁ is tetrahydrofuranyl, m=1;
complex 94: complex of formula (II), wherein M is Zr, L₁ is fluorenyl, R₁₁, R₁₃ and R₁₅ are H, R₁₂ and R₁₄ are -CF₃, X is methyl, n=2, R₁ is tetrahydrofuranyl, m=1;
complex 95: complex of formula (II), wherein M is Zr, L₁ is fluorenyl, R₁₁, R₁₃ and R₁₅ are H, R₁₂ and R₁₄ are -CF₃, X is -CH₂C₆H₅, n=2, R₁ is tetrahydrofuranyl, m=1;
complex 96: complex of formula (II), wherein M is Zr, L₁ is fluorenyl, R₁₁, R₁₂, R₁₄ and R₁₅ are H, R₁₃ is methoxy, X is Cl, n=2, R₁ is tetrahydrofuranyl, m=1;
complex 97: complex of formula (II), wherein M is Hf, L₁ is cyclopentadienyl, R₁₁-R₁₅ are H, X is Cl, n=2, m=0;
complex 98: complex of formula (II), wherein M is Hf, L₁ is pentamethyl cyclopentadienyl, R₁₁-R₁₅ are H, X is Cl, n=2, m=0;
complex 99: complex of formula (II), wherein M is Hf, L₁ is 1-methyl-2,4-cyclopentadienyl, R₁₁-R₁₅ are H, X is Cl, n=2, m=0;
complex 100: complex of formula (II), wherein M is Hf, L₁ is 1-n-butyl-2,4-cyclopentadienyl, R₁₁-R₁₅ are H, X is Cl, n=2, m=0;
complex 101: complex of formula (II), wherein M is Hf, L₁ is 1-tert-butyl-2,4-cyclopentadienyl, R₁₁-R₁₅ are H, X is Cl, n=2, m=0;
complex 102: complex of formula (II), wherein M is Hf, L₁ is indenyl, R₁₁-R₁₅ are H, X is Cl, n=2, m=0;
complex 103: complex of formula (II), wherein M is Hf, L₁ is fluorenyl, R₁₁-R₁₅ are H, X is Cl, n=2, m=0;
complex 104: complex of formula (II), wherein M is Hf, L₁ is phenyl-indenyl, R₁₁-R₁₅ are H, X is Cl, n=2, m=0;
complex 105: complex of formula (II), wherein M is Hf, L₁ is cyclopentadienyl, R₁₁, R₁₂, R₁₄ and R₁₅ are H, R₁₃ is -CF₃, X is Cl, n=2, m=0;
complex 106: complex of formula (II), wherein M is Hf, L₁ is cyclopentadienyl, R₁₁, R₁₃, R₁₄ and R₁₅ are H, R₁₂ is -CF₃, X is Cl, n=2, m=0;
complex 107: complex of formula (II), wherein M is Hf, L₁ is cyclopentadienyl, R₁₁, R₁₂, R₁₄ and R₁₅ are H, R₁₃ is methoxy, X is Cl, n=2, m=0;
complex 108: complex of formula (II), wherein M is Hf, L₁ is pentamethyl cyclopentadienyl, R₁₁, R₁₂, R₁₄ and R₁₅ are H, R₁₃ is -CF₃, X is Cl, n=2, m=0;
complex 109: complex of formula (II), wherein M is Hf, L₁ is pentamethyl cyclopentadienyl, R₁₁, R₁₃ and R₁₅ are H, R₁₂ and R₁₄ are -CF₃, X is Cl, n=2, m=0;
complex 110: complex of formula (II), wherein M is Hf, L₁ is pentamethyl cyclopentadienyl, R₁₁, R₁₂, R₁₄ and R₁₅ are H, R₁₃ is methoxy, X is Cl, n=2, m=0;
complex 111: complex of formula (II), wherein M is Hf, L₁ is pentamethyl cyclopentadienyl, R₁₁, R₁₃ and R₁₅ are H, R₁₂ and R₁₄ are methyl, X is Cl, n=2, m=0;
complex 112: complex of formula (II), wherein M is Hf, L₁ is indenyl, R₁₁, R₁₂, R₁₄ and R₁₅ are H, R₁₃ is -CF₃, X is Cl, n=2, m=0;
complex 113: complex of formula (II), wherein M is Hf, L₁ is indenyl, R₁₁, R₁₃ and R₁₅ are H, R₁₂ and R₁₄ are -CF₃, X is Cl, n=2, m=0;
complex 114: complex of formula (II), wherein M is Hf, L₁ is indenyl, R₁₁, R₁₂, R₁₄ and R₁₅ are H, R₁₃ is methoxy, X is Cl, n=2, m=0;
complex 115: complex of formula (II), wherein M is Hf, L₁ is indenyl, R₁₁, R₁₃ and R₁₅ are H, R₁₂ and R₁₄ are methyl, X is Cl, n=2, m=0;
complex 116: complex of formula (II), wherein M is Hf, L₁ is fluorenyl, R₁₁, R₁₂, R₁₄ and R₁₅ are H, R₁₃ is -CF₃, X is Cl, n=2, m=0;
complex 117: complex of formula (II), wherein M is Hf, L₁ is fluorenyl, R₁₁, R₁₃ and R₁₅ are H, R₁₂ and R₁₄ are -CF₃, X is Cl, n=2, m=0;
complex 118: complex of formula (II), wherein M is Hf, L₁ is fluorenyl, R₁₁, R₁₂, R₁₄ and R₁₅ are H, R₁₃ is methoxy, X is Cl, n=2, m=0.

A method for preparing the above-mentioned phosphine-phenol half-metallocene complex may comprise:
(1) reacting a compound of formula (III) with a compound of formula (IV), to obtain a ligand of formula (V);
(2) reacting the ligand with a hydrogen abstracting agent, and then reacting with an M metal compound, wherein, the metal M in the M metal compound is selected from Group IVB metals, the M metal compound contains at least one of substituted or unsubstituted cyclopentadienyl, substituted or unsubstituted indenyl, tetrahydroindenyl and substituted or unsubstituted fluorenyl; 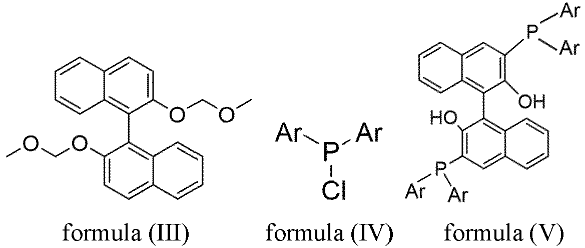 wherein, the definition of Ar is the same as described above.

In a more preferred embodiment, the reaction process of step (1) is shown in the following equation. 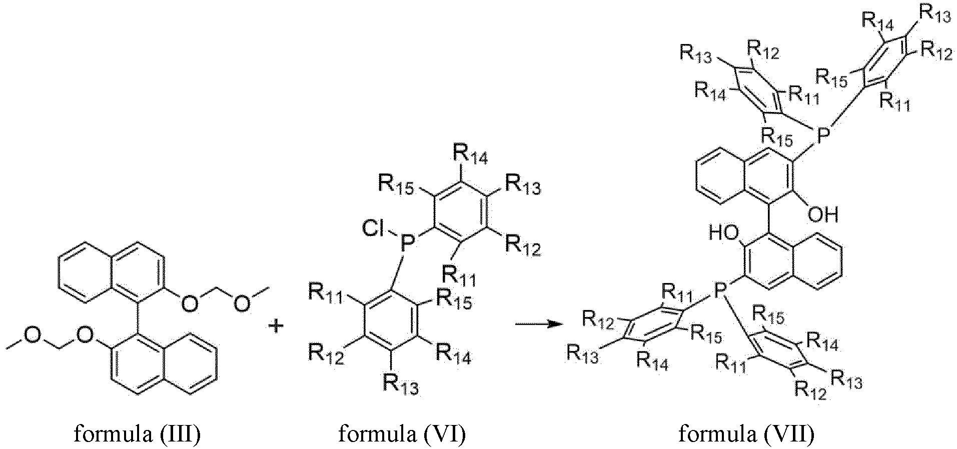 wherein, the definitions of R₁₁-R₁₅ are the same as described above.

In the method of the present invention, the compound of formula (III) may be of S and/or R configuration.

In the method of the present invention, preferably, the transition metal M in the M metal compound is selected from titanium, zirconium and hafnium. Further preferably, the M metal compound is selected from at least one of cyclopentadienyl titanium trichloride, pentamethyl cyclopentadienyl titanium trichloride, methyl-cyclopentadienyl titanium trichloride, n-butyl-cyclopentadienyl titanium trichloride, tert-butyl-cyclopentadienyl titanium trichloride, indenyl titanium trichloride, fluorenyl titanium trichloride, butyl-indenyl-titanium trichloride, 1-methyl-indenyl titanium trichloride, 2-methyl-indenyl titanium trichloride, 1-phenyl-indenyl-titanium trichloride, cyclopentadienyl zirconium trichloride, pentamethyl cyclopentadienyl zirconium trichloride, methyl-cyclopentadienyl zirconium trichloride, 1,3-dimethyl-cyclopentadienyl-zirconium trichloride, 1,2,4-trimethyl-cyclopentadienyl-zirconium trichloride, n-butyl-cyclopentadienyl zirconium trichloride, tert-butyl-cyclopentadienyl zirconium trichloride, indenyl zirconium trichloride, fluorenyl zirconium trichloride, butyl-indenyl-zirconium trichloride, 1-methyl-indenyl zirconium trichloride, 2-methyl-indenyl zirconium trichloride, 1-phenyl-indenyl-zirconium trichloride, cyclopentadienyl-1,2-dimethoxy-ethyl-zirconium trichloride, cyclopentadienyl hafnium trichloride, pentamethyl cyclopentadienyl hafnium trichloride, methyl-cyclopentadienyl hafnium trichloride, 1,2,3,4-tetramethyl-cyclopentadienyl-hafnium trichloride, n-butyl-cyclopentadienyl hafnium trichloride, tert-butyl-cyclopentadienyl hafnium trichloride, isobutyl-cyclopentadienyl hafnium trichloride, indenyl hafnium trichloride, fluorenyl hafnium trichloride, trihydro-indenyl-hafnium trichloride and cyclopentadienyl-1,2-dimethoxy-ethyl-hafnium trichloride.

In the method of the present invention, in a preferred case, the reaction process of step (1) comprises preferably first reacting a compound of formula (III) with a hydrogen abstracting agent, and then reacting with a compound of formula (IV).

In step (1) and step (2), the hydrogen abstracting agents used may be the same or different, and are each independently selected from at least one of NaH, KH, n-butyl lithium and methyl lithium.

In a specific embodiment, the preparation process of step (1) comprises: under a protective gas (such as nitrogen) atmosphere, dissolving a compound of formula (III) in anhydrous diethyl ether, adding a hydrogen abstracting agent (such as n-butyl lithium) at room temperature, stirring at room temperature, adding tetrahydrofuran, and further stirring the obtained black solution containing precipitate; next, adding a compound of formula (VI), stirring at room temperature, and quenching with the addition of NH₄Cl aqueous solution; then extracting the organic phase with ethyl acetate, drying the obtained organic phase over anhydrous sodium sulfate, and recrystallizing with dichloromethane/hexane to obtain a yellow crystalline compound; afterwards, adding methanol and concentrated hydrochloric acid, reacting under reflux, after the completion of the reaction, removing the organic solvent, dissolving the product in ethyl acetate, neutralizing with NaHCO₃ aqueous solution, and extracting the organic phase, followed by drying, filtration, concentration, and column chromatography to obtain a ligand of formula (VII).

In a specific embodiment, the preparation process of step (2) comprises: under a protective gas (such as nitrogen) atmosphere, dissolving the ligand obtained in step (1) in tetrahydrofuran, adding excess hydrogen abstracting agent (such as NaH, KH and the like), stirring at room temperature, filtering to remove the hydrogen abstracting agent, then adding a tetrahydrofuran solution of M metal compound, reacting overnight at room temperature, removing the solvent by suction, dissolving in dichloromethane, filtering to remove the filter cake, concentrating the filtrate, and recrystallizing with heptane, to obtain the phosphine-phenol half-metallocene complex of the present invention.

The present invention also provides use of the above-mentioned phosphine-phenol half-metallocene complex in olefin polymerization. Preferably, the olefins include ethylene, α-olefins, and cycloolefins. The cycloolefins include but are not limited to: cyclobutene, cyclopentene, cyclohexene, cycloheptene, cyclooctene, norbornene and the like.

The present invention also provides an olefin polymerization catalyst, comprising the above-mentioned phosphine-phenol half-metallocene complex as a primary catalyst.

The olefin polymerization catalyst further comprises a cocatalyst. The cocatalyst is organoaluminum compound and/or organoboron compound.

The organoaluminum compound is selected from alkylaluminoxane or organoaluminum compound of general formula AlRₙX¹₃₋ₙ (alkyl aluminum or alkyl aluminum halide). In the general formula AlRₙX¹₃₋ₙ, R is H, C1-C20 hydrocarbyl (such as C1-C10 hydrocarbyl) or C1-C20 hydrocarbyloxy (such as C1-C10 hydrocarbyloxy), preferably C1-C20 alkyl (such as C1-C10 alkyl), C1-C20 alkoxy (such as C1-C10 alkoxy), C7-C20 aralkyl (such as C7-C15 aralkyl) or C6-C20 aryl (such as C6-C15 aryl); X¹ is halogen, preferably chlorine or bromine; 0<n≤3. Specific examples of the organoaluminum compound include but are not limited to: trimethyl aluminum, triethyl aluminum, triisobutyl aluminum, tri-n-hexyl aluminum, trioctyl aluminum, diethylaluminum hydride, diisobutyl aluminum hydride, diethylaluminum chloride, diisobutyl aluminum chloride, ethylaluminum sesquichloride, ethyl aluminum dichloride, methyl aluminoxane (MAO) and modified methyl aluminoxane (MMAO). Preferably, the organoaluminum compound is methyl aluminoxane (MAO).

The organoboron compound is selected from aryl boron and/or borate. The aryl boron is preferably substituted or unsubstituted phenyl boron, more preferably tri(pentafluorophenyl) boron. The borate is preferably N,N-dimethylanilinium tetrakis(pentafluorophenyl) borate and/or triphenylmethyl tetrakis(pentafluorophenyl) borate.

According to the preferred embodiment of the present invention, when the cocatalyst is organoaluminum compound, the molar ratio of the aluminum in the cocatalyst to the metal M in the primary catalyst is (10-10⁷):1, for example, 10:1, 20:1, 50:1, 100:1, 200:1, 300:1, 500:1, 700:1, 800:1, 1000:1, 2000:1, 3000:1, 5000:1, 10000:1, 100000:1, 1000000:1, 10000000:1 and any value therebetween, preferably (10-100000):1, more preferably (100-10000):1; when the cocatalyst is organoboron compound, the molar ratio of the boron in the cocatalyst to the metal M in the primary catalyst is (0.1-1000):1, for example, 0.1:1, 0.2:1, 0.5:1, 1:1, 2:1, 3:1, 5:1, 8:1, 10:1, 20:1, 50:1, 100:1, 200:1, 300:1, 500:1, 700:1, 800:1, 1000:1 and any value therebetween, preferably (0.1-500):1.

In the present invention, the olefins are C2-C16 olefins. Preferably, the olefins are ethylene or α-olefins having 3 to 16 carbon atoms.

The present invention also provides an olefin polymerization method, comprising carrying out olefin polymerization reaction in the presence of the above-mentioned olefin polymerization catalyst. The olefin polymerization reaction may be homopolymerization or copolymerization.

The olefin polymerization reaction nay have a temperature of -78°C~200°C, preferably - 20°C~150°C, and a pressure of 0.01~10MPa, preferably 0.01~5MPa. Here, the term "pressure" refers to ethylene pressure in the polymerization system, expressed in absolute pressure.

In the olefin polymerization method according to the present invention, the olefins are C2-C16 α-olefins.

According to an embodiment of the present invention, the olefins include ethylene.

According to an embodiment of the present invention, the olefins include ethylene, propylene, α-olefin and cycloolefins.

According to an embodiment of the present invention, the olefin polymerization reaction is carried out by olefin monomers in a solvent, and the solvent for polymerization is selected from one or more of alkanes, aromatic hydrocarbons and halogenated hydrocarbons. Specifically, the solvent for polymerization is selected from one or more of hexane, pentane, heptane, benzene, toluene, dichloromethane, chloroform, chlorobenzene and dichloroethane, preferably one or more of hexane, toluene and heptane.

In the present invention, alkyl refers to linear alkyl, branched alkyl, or cyclic alkyl, including but not limited to: methyl, ethyl, n-propyl, isopropyl, n-butyl, sec-butyl, isobutyl, tert-butyl, n-pentyl, isopentyl, tert-pentyl, neopentyl, n-hexyl, n-heptyl, n-octyl, n-decyl, cyclopropyl, cyclopentyl, cyclohexyl, 4-methylcyclohexyl, 4-ethylcyclohexyl, 4-n-propylcyclohexyl, and 4-n-butylcyclohexyl.

In the present invention, examples of aryl include, but are not limited to: phenyl, 4-methylphenyl, 4-ethylphenyl, dimethylphenyl, vinylphenyl.

In the present invention, alkenyl refers to linear alkenyl, branched alkenyl or cycloalkenyl, including but not limited to: vinyl, allyl, butenyl.

In the present invention, examples of aralkyl include, but are not limited to: phenylmethyl, phenylethyl, phenyl-n-propyl, phenyl-isopropyl, phenyl-n-butyl and phenyl-tert-butyl.

In the present invention, examples of alkaryl include, but are not limited to: tolyl, ethylphenyl, n-propylphenyl, isopropylphenyl, n-butylphenyl and tert-butylphenyl.

The phosphine-phenol half-metallocene complex and preparation method therefor and use thereof according to the present invention are further illustrated by the following examples. The examples, which are implemented on the premise of the technical solution of the present invention, give detailed embodiments and specific operation processes. However, the protection scope of the present invention is not limited to the following examples.

The experimental methods in the following examples, unless otherwise specified, are conventional methods in the art. The experimental materials used in the following examples are commercially available unless otherwise specified.

The analytical characterization equipment and test methods used in the following Examples and Comparative Examples are as follows:
(1) Nuclear magnetic resonance instrument: Bruker DMX 300 (300 MHz), with tetramethylsilane (TMS) as the internal standard.
(2) Molecular weight and molecular weight distribution PDI (PDI = Mw/Mn) of the polymer: the measurement is carried out at 150 °C using a PL-GPC220 chromatograph with trichlorobenzene as the solvent (in which standard sample: PS, flow rate: 1.0 mL/min, chromatographic column: 3×PLgel 10um M1×ED-B, 300 ×7.5nm).
(3) Activity measurement method: the polymer is washed with hydrochloric acid-ethanol solution, dried in vacuum, and weighed. The polymerization activity is calculated as: polymer weight (g)/metal (mol) ×60/polymerization time (min).
(4) Analysis of the comonomer content of the polymer: the polymer sample is dissolved in 1,2,4-trichlorobenzene at 120°C, and analyzed by ¹H NMR, ¹³C NMR spectrum on a 400MHz Bruker Avance 400 nuclear magnetic resonance spectrometer using a 10mm PASEX 13 probe.

### Example 1

complex 43: complex of formula (II), wherein M is Zr, L₁ is pentamethyl cyclopentadienyl, R₁₁-R₁₅ are H, X is Cl, n=2, R₁ is tetrahydrofuranyl, m=1.

Under a nitrogen atmosphere, a compound of formula (III) (11.23g, 30mmol, S configuration) was dissolved in anhydrous diethyl ether (150mL), an n-butyl lithium solution (2.7M, 33.3mL, 90mmol) was added dropwise at room temperature condition, and the solution was stirred at room temperature for 4h. Tetrahydrofuran (150mL) was added, and the obtained black solution containing precipitate was further stirred for 1h. Diphenylphosphine chloride (PPh₂Cl) (90mmol, 16.7mL) was added at 0°C. The solution was stirred at room temperature for 1h, and then quenched with the addition of NH₄Cl aqueous solution (5mL). The organic phase was extracted with ethyl acetate, and the obtained organic phase was dried over anhydrous sodium sulfate, recrystallized with dichloromethane/hexane, to obtain a yellow crystalline compound (15.54 g). Methanol (100mL), 5mL of concentrated hydrochloric acid (37wt%) were added, and reacted under reflux for 16h. After the reaction as tracked using thin-layer chromatography (TLC) was completed, the organic solvent was removed, and the product was dissolved in ethyl acetate, and neutralized with NaHCO₃ aqueous solution. The organic phase was extracted, dried over anhydrous MgSO₄, filtered, concentrated, and separated by column chromatography (dichloromethane as solvent) to obtain ligand L₁, with a yield of 67 %. ¹H NMR (400 MHz, CDCl₃): δ = 5.41 (s, 2H), 7.13-7.15 (m, 2H), 7.24-7.29 (m, 4H), 7.38-7.45 (m, 22H), 7.62-7.64 (m, 2H). ³¹P NMR (162 MHz, CDCl₃): δ =-17.19 (s). High resolution mass spectrometry test: theoretical calculation value: 654.19; test value: 655.20.

Under a nitrogen atmosphere, the ligand L₁ (0.654g, 1mmol) was dissolved in tetrahydrofuran, excess NaH (0.072g, 3mmol) was added, the solution was stirred at room temperature for 10 h, and then NaH was removed by filtration. A solution of pentamethyl cyclopentadienyl zirconium trichloride (0.666g, 2mmol) in tetrahydrofuran (-78°C) was added dropwise, and reacted overnight at room temperature. The solvent was removed by suction, and the product was dissolved in dichloromethane (40mL). The solution was filtered to remove the filter cake, the filtrate was concentrated, and recrystallized with heptane to obtain a yellow complex 43, with a yield of 77%. ¹HNMR (400 MHz, CDCl₃): δ = 2.00 (m, 30H), 3.63 (m, 8H), 1.97 (m, 8H), 6.63-7.56 (m, 22H), 7.58-7.80 (m, 6H), 7.95-8.10 (m, 2H). Elemental analysis test C₇₂H₇₆Cl₄O₄P₂Zr₂: theoretical calculation value: C, 62.14; H, 5.51; test value: C, 62.32; H, 5.62.

A 1L stainless steel polymerization kettle equipped with mechanical stirrer was dried continuously at 130°C for 6h, vacuumized while hot and purged 3 times with N₂. To the polymerization kettle, 500mL of toluene was charged, and methylaluminoxane (6.5 mL, 10 mmol), 6.9mg (5µmol) of complex 43 were added. The reaction was carried out with stirring vigorously at 75°C for 20min while maintaining an ethylene pressure of 4.0 atm. The reaction solution was neutralized with a 10 wt% hydrochloric acid acidified ethanol solution to obtain polyethylene. The polymer was dried and weighed for the test of polymerization activity. The test data of weight average molecular weight, molecular weight distribution and polymerization activity of the obtained polymer are shown in Table 1.

### Example 2

complex 43: complex of formula (II), wherein M is Zr, L₁ is pentamethyl cyclopentadienyl, R₁₁-R₁₅ are H, X is Cl, n=2, R₁ is tetrahydrofuranyl, m=1.

A 1L stainless steel polymerization kettle equipped with mechanical stirrer was dried continuously at 130°C for 6h, vacuumized while hot and purged 3 times with N₂. To the polymerization kettle, 500mL of toluene was charged, and methylaluminoxane (6.5 mL, 10 mmol), 6.9mg (5µmol) of complex 43 were added. The reaction was carried out with stirring vigorously at 100°C for 20 min while maintaining an ethylene pressure of 4.0 atm. The reaction solution was neutralized with a 10 wt% hydrochloric acid acidified ethanol solution to obtain polyethylene. The results are shown in Table 1. The polymer was dried and weighed for the test of polymerization activity. The test data of weight average molecular weight, molecular weight distribution and polymerization activity of the obtained polymer are shown in Table 1.

### Example 3

complex 43: complex of formula (II), wherein M is Zr, L₁ is pentamethyl cyclopentadienyl, R₁₁-R₁₅ are H, X is Cl, n=2, R₁ is tetrahydrofuranyl, m=1.

A 1L stainless steel polymerization kettle equipped with mechanical stirrer was dried continuously at 130°C for 6h, vacuumized while hot and purged 3 times with N₂. To the polymerization kettle, 500mL of toluene was charged, and methylaluminoxane (6.5 mL, 10 mmol), 10 mL of 1-octene, 6.9mg (5µmol) of complex 43 were added. The reaction was carried out with stirring vigorously at 75°C for 10min while maintaining an ethylene pressure of 4.0 atm. The reaction solution was neutralized with a 10 wt% hydrochloric acid acidified ethanol solution to obtain a polymer. The polymer was dried and weighed for the test of polymerization activity. The test data of weight average molecular weight, molecular weight distribution, polymerization activity and comonomer content of the obtained polymer are shown in Table 1.

### Example 4

complex 2: complex of formula (II), wherein M is Ti, L₁ is pentamethyl cyclopentadienyl, R₁₁-R₁₅ are H, X is Cl, n=2, m=0.

A ligand L₁ was prepared according to the method of Example 1.

Under a nitrogen atmosphere, the ligand L₁ (0.654g, 1mmol) was dissolved in tetrahydrofuran, excess NaH (0.072g, 3mmol) was added, the solution was stirred at room temperature for 10 h, and then NaH was removed by filtration. A solution of pentamethyl cyclopentadienyl titanium trichloride (0.578g, 2mmol) in tetrahydrofuran was added dropwise, and reacted overnight at room temperature. The solvent was removed by suction, and the product was dissolved in dichloromethane (40mL). The solution was filtered to remove the filter cake, the filtrate was concentrated, and recrystallized with heptane to obtain an orange complex 2, with a yield of 79%. ¹HNMR (300 MHz, CDCl₃): δ = 2.28 (s, 30H), 7.13-7.16 (m, 2H), 7.27-7.30 (m, 4H), 7.38-7.48 (m, 22H), 7.61-7.64 (m, 2H). Elemental analysis test C₆₄H₆₀Cl₄O₂P₂Ti₂: theoretical calculation value: C, 66.23; H, 5.21; test value: C, 66.41; H, 5.52.

A 1L stainless steel polymerization kettle equipped with mechanical stirrer was dried continuously at 130°C for 6h, vacuumized while hot and purged 3 times with N₂. To the polymerization kettle, 500mL of toluene was charged, and methylaluminoxane (6.5 mL, 10 mmol), 5.8mg (5µmol) of complex 2 were added. The reaction was carried out with stirring vigorously at 30°C for 10min while maintaining an ethylene pressure of 4.0 atm. The reaction solution was neutralized with a 10 wt% hydrochloric acid acidified ethanol solution to obtain polyethylene. The polymer was dried and weighed for the test of polymerization activity. The test data of weight average molecular weight, molecular weight distribution and polymerization activity of the obtained polymer are shown in Table 1.

### Example 5

complex 2: complex of formula (II), wherein M is Ti, L₁ is pentamethyl cyclopentadienyl, R₁₁-R₁₅ are H, X is Cl, n=2, m=0.

A 100mL stainless steel polymerization kettle equipped with mechanical stirrer was dried continuously at 130°C for 6h, vacuumized while hot and purged 3 times with N₂. To the polymerization kettle, 50mL of toluene was charged, and triisobutylaluminum (0.2mL, 1mol/L), triphenylmethyl tetra(pentafluorophenyl) borate (2mL, 2mmol/L), 2.5g of norbornene, 1.2mg (1µmol) of complex 2 were added. The reaction was carried out with stirring vigorously at 25°C for 10min while maintaining an ethylene pressure of 4.0 atm. The reaction solution was neutralized with a 10 wt% hydrochloric acid acidified ethanol solution to obtain a polymer. The polymer was dried and weighed for the test of polymerization activity. The test data of weight average molecular weight, molecular weight distribution, polymerization activity and comonomer content of the obtained polymer are shown in Table 1.

### Example 6

complex 2: complex of formula (II), wherein M is Ti, L₁ is pentamethyl cyclopentadienyl, R₁₁-R₁₅ are H, X is Cl, n=2, m=0.

A 1L stainless steel polymerization kettle equipped with mechanical stirrer was dried continuously at 130°C for 6h, vacuumized while hot and purged 3 times with N₂. To the polymerization kettle, 500mL of toluene was charged, and methylaluminoxane (6.5 mL, 10 mmol), 5.8mg (5µmol) of complex 2 were added. The reaction was carried out with stirring vigorously at 75°C for 20min while maintaining an ethylene pressure of 4.0 atm. The reaction solution was neutralized with a 10 wt% hydrochloric acid acidified ethanol solution to obtain polyethylene. The polymer was dried and weighed for the test of polymerization activity. The test data of weight average molecular weight, molecular weight distribution and polymerization activity of the obtained polymer are shown in Table 1.

### Example 7

complex 2: complex of formula (II), wherein M is Ti, L₁ is pentamethyl cyclopentadienyl, R₁₁-R₁₅ are H, X is Cl, n=2, m=0.

A 1L stainless steel polymerization kettle equipped with mechanical stirrer was dried continuously at 130°C for 6h, vacuumized while hot and purged 3 times with N₂. To the polymerization kettle, 500mL of toluene was charged, and methylaluminoxane (6.5 mL, 10 mmol), 10 mL of 1-octene, 5.8mg (5µmol) of complex 2 were added. The reaction was carried out with stirring vigorously at 75°C for 30min while maintaining an ethylene pressure of 4.0 atm. The reaction solution was neutralized with a 10 wt% hydrochloric acid acidified ethanol solution to obtain polyethylene. The polymer was dried and weighed for the test of polymerization activity. The test data of weight average molecular weight, molecular weight distribution, polymerization activity and comonomer content of the obtained polymer are shown in Table 1.

### Example 8

complex 98: complex of formula (II), wherein M is Hf, L₁ is pentamethyl cyclopentadienyl, R₁₁-R₁₅ are H, X is Cl, n=2, m=0.

A ligand L₁ was prepared according to the method of Example 1.

Under a nitrogen atmosphere, the ligand L₁ (0.654g, 1mmol) was dissolved in tetrahydrofuran, excess NaH (0.072g, 3mmol) was added, the solution was stirred at room temperature for 10 h, and then NaH was removed by filtration. A solution of pentamethyl cyclopentadienyl hafnium trichloride (0.840g, 2mmol) in tetrahydrofuran (-78°C) was added dropwise, and reacted overnight at room temperature. The solvent was removed by suction, and the product was dissolved in dichloromethane (40mL). The solution was filtered to remove the filter cake, the filtrate was concentrated, and recrystallized with heptane to obtain a white complex 98, with a yield of 80%. ¹HNMR (300 MHz, CDCl₃): δ = 1.93-2.06 (m, 30H), 7.05-7.07 (m, 2H), 7.17-7.21 (m, 4H), 7.28-7.37 (m, 22H), 7.53-7.55 (m, 2H). Elemental analysis test C₆₄H₆₀Cl₄Hf₂O₂P₂: theoretical calculation value: C, 54.06; H, 4.25; test value: C, 54.27; H, 4.46.

A 1L stainless steel polymerization kettle equipped with mechanical stirrer was dried continuously at 130°C for 6h, vacuumized while hot and purged 3 times with N₂. To the polymerization kettle, 500mL of toluene was charged, and methylaluminoxane (6.5 mL, 10 mmol), 7.1mg (5µmol) of complex 98 were added. The reaction was carried out with stirring vigorously at 75°C for 10min while maintaining an ethylene pressure of 4.0 atm. The reaction solution was neutralized with a 10 wt% hydrochloric acid acidified ethanol solution to obtain polyethylene. The polymer was dried and weighed for the test of polymerization activity. The test data of weight average molecular weight, molecular weight distribution and polymerization activity of the obtained polymer are shown in Table 1.

### Example 9

complex 98: complex of formula (II), wherein M is Hf, L₁ is pentamethyl cyclopentadienyl, R₁₁-R₁₅ are H, X is Cl, n=2, m=0.

A 1L stainless steel polymerization kettle equipped with mechanical stirrer was dried continuously at 130°C for 6h, vacuumized while hot and purged 3 times with N₂. To the polymerization kettle, 500mL of toluene was charged, and methylaluminoxane (6.5 mL, 10 mmol), 10 mL of 1-octene, 7.1mg (5µmol) of complex 98 were added. The reaction was carried out with stirring vigorously at 75°C for 10min while maintaining an ethylene pressure of 4.0 atm. The reaction solution was neutralized with a 10 wt% hydrochloric acid acidified ethanol solution to obtain a polymer. The polymer was dried and weighed for the test of polymerization activity. The test data of weight average molecular weight, molecular weight distribution, polymerization activity and comonomer content of the obtained polymer are shown in Table 1.

### Example 10

complex 78: complex of formula (II), wherein M is Zr, L₁ is pentamethyl cyclopentadienyl, R₁₁, R₁₃ and R₁₅ are H, R₁₂ and R₁₄ are -CF₃, X is Cl, n=2, R₁ is tetrahydrofuranyl, m=1.

Under a nitrogen atmosphere, a compound of formula (III) (3.74g, 10mmol, R configuration) was dissolved in anhydrous diethyl ether (120mL), an n-butyl lithium solution (2.7M, 11.1mL, 30mmol) was added dropwise at room temperature, and the solution was stirred at room temperature for 4h. Tetrahydrofuran (120mL) was added, and the obtained black solution containing precipitate was further stirred for 1h. Bis(3,5-di(trifluoromethyl)phenyl)phosphine chloride (30mmol, 14.78g) was added at 0°C. The solution was stirred at room temperature for 1h, and then quenched with the addition of NH₄Cl aqueous solution (5mL). The organic phase was extracted with ethyl acetate, and the obtained organic phase was dried over anhydrous sodium sulfate, recrystallized with dichloromethane/hexane, to obtain a white crystalline compound. Methanol (100mL), 5mL of concentrated hydrochloric acid (37wt%) were added, and reacted under reflux for 16h. After the reaction as tracked using TLC was completed, the organic solvent was removed, and the product was dissolved in ethyl acetate, and neutralized with NaHCO₃ aqueous solution. The organic phase was extracted, dried over anhydrous MgSO₄, filtered, concentrated, and separated by column chromatography (dichloromethane as solvent) to obtain ligand L₂, with a yield of 40%. ¹H NMR (400 MHz, DMSO) δ 9.10 (s, 2H), 8.17 (s, 2H), 8.13 (s, 2H), 8.08 (dd, J = 13.3, 6.5 Hz, 8H), 7.81 (d, J = 7.6 Hz, 2H), 7.56 (d, J = 8.4 Hz, 2H), 7.27 (dd, 4H), 6.90 (d, J = 8.2 Hz, 2H). High resolution mass spectrometry test: theoretical calculation value: 1198.09; test value: 1198.95. ³¹P NMR (162 MHz, DMSO): δ =-8.37 (s). ¹H NMR (400 MHz, CDCl₃) δ 5.14(s, 2H), 7.08-7.11 (m, 2H), 7.41-7.46 (m, 4H), 7.63 (d, 2H), 7.78-7.81(m, 2H), 7.84(d, 4H), 7.86(d, 4H), 7.91(s, 2H), 7.94(s, 2H).

Under a nitrogen atmosphere, the ligand L₂ (1.20, 1mmol) was dissolved in tetrahydrofuran, excess NaH (0.072g, 3mmol) was added, the solution was stirred at room temperature for 10 h, and then NaH was removed by filtration. A solution of pentamethyl cyclopentadienyl zirconium trichloride (0.666g, 2mmol) in tetrahydrofuran was added dropwise, and reacted overnight at room temperature. The solvent was removed by suction, and the product was dissolved in dichloromethane (40mL). The solution was filtered to remove the filter cake, the filtrate was concentrated, and recrystallized with heptane to obtain a yellow complex 78, with a yield of 77%. Elemental analysis test C₈₀H₆₈Cl₂₄F₂₄O₄P₂Zr₂: theoretical calculation value: C, 49.64; H, 3.54; test value: C, 49.84; H, 3.61.

A 1L stainless steel polymerization kettle equipped with mechanical stirrer was dried continuously at 130°C for 6h, vacuumized while hot and purged 3 times with N₂. To the polymerization kettle, 500mL of toluene was charged, and methylaluminoxane (6.5 mL, 10 mmol), 9.6mg (5µmol) of complex 78 were added. The reaction was carried out with stirring vigorously at 75°C for 20min while maintaining an ethylene pressure of 4.0 atm. The reaction solution was neutralized with a 10 wt% hydrochloric acid acidified ethanol solution to obtain polyethylene. The polymer was dried and weighed for the test of polymerization activity. The test data of weight average molecular weight, molecular weight distribution and polymerization activity of the obtained polymer are shown in Table 1.

### Example 11

complex 36: complex of formula (II), wherein M is Ti, L₁ is indenyl, R₁₁, R₁₃ and R₁₅ are H, R₁₂ and R₁₄ are -CF₃, X is Cl, n=2, m=0.

A ligand L₂ was prepared according to the method of Example 10.

Under a nitrogen atmosphere, the ligand L₂ (1.20, 1mmol) was dissolved in tetrahydrofuran, excess NaH (0.072g, 3mmol) was added, the solution was stirred at room temperature for 10 h, and then NaH was removed by filtration. A solution of indenyl titanium trichloride (0.539g, 2mmol) in tetrahydrofuran was added dropwise, and reacted overnight at room temperature. The solvent was removed by suction, and the product was dissolved in dichloromethane (40mL). The solution was filtered to remove the filter cake, the filtrate was concentrated, and recrystallized with heptane to obtain a red complex 36, with a yield of 75%. Elemental analysis test C₇₀H₃₆Cl₄F₂₄O₂P₂Ti₂: theoretical calculation value: C, 50.51; H, 2.18; test value: C, 50.68; H, 2.32.

A 1L stainless steel polymerization kettle equipped with mechanical stirrer was dried continuously at 130°C for 6h, vacuumized while hot and purged 3 times with N₂. To the polymerization kettle, 500mL of toluene was charged, and methylaluminoxane (6.5 mL, 10 mmol), 8.3mg (5µmol) of complex 36 were added. The reaction was carried out with stirring vigorously at 30°C for 20min while maintaining an ethylene pressure of 4.0 atm. The reaction solution was neutralized with a 10 wt% hydrochloric acid acidified ethanol solution to obtain polyethylene. The polymer was dried and weighed for the test of polymerization activity. The test data of weight average molecular weight, molecular weight distribution and polymerization activity of the obtained polymer are shown in Table 1.

### Example 12

complex 71: complex of formula (II), wherein M is Zr, L₁ is pentamethyl cyclopentadienyl, R₁₁, R₁₂, R₁₄ and R₁₅ are H, R₁₃ is methoxy, X is Cl, n=2, R₁ is tetrahydrofuranyl, m=1.

Under a nitrogen atmosphere, a compound of formula (III) (3.74g, 10mmol, S configuration) was dissolved in anhydrous diethyl ether (120mL), an n-butyl lithium solution (2.7M, 11.1mL, 30mmol) was added dropwise at room temperature, and the solution was stirred at room temperature for 4h. Tetrahydrofuran (120mL) was added, and the obtained black solution containing precipitate was further stirred for 1h. Di(4-methoxy)phosphine chloride (30mmol, 8.42g) was added at 0°C. The solution was stirred at room temperature for 1h, and then quenched with the addition of NH₄Cl aqueous solution (5mL). The organic phase was extracted with ethyl acetate, and the obtained organic phase was dried over anhydrous sodium sulfate, recrystallized with dichloromethane/hexane, to obtain a white crystalline compound. Methanol (100mL), 5mL of concentrated hydrochloric acid (37wt%) were added, and reacted under reflux for 16h. After the reaction as tracked using TLC was completed, the organic solvent was removed, and the product was dissolved in ethyl acetate, and neutralized with NaHCO₃ aqueous solution. The organic phase was extracted, dried over anhydrous MgSO₄, filtered, concentrated, and separated by column chromatography (dichloromethane as solvent) to obtain ligand L₃, with a yield of 56 %.

Under a nitrogen atmosphere, the ligand L₃ (0.774, 1mmol) was dissolved in tetrahydrofuran, excess NaH (0.072g, 3mmol) was added, the solution was stirred at room temperature for 10 h, and then NaH was removed by filtration. A solution of pentamethyl cyclopentadienyl zirconium trichloride (0.666g, 2mmol) in tetrahydrofuran was added dropwise, and reacted overnight at room temperature. The solvent was removed by suction, and the product was dissolved in dichloromethane (40mL). The solution was filtered to remove the filter cake, the filtrate was concentrated, and recrystallized with heptane to obtain a yellow complex 71, with a yield of 78%. Elemental analysis test C₇₆H₈₄Cl₄O₈P₂Zr₂: theoretical calculation value: C, 60.38; H, 5.60; test value: C, 60.44; H, 5.67.

A 1L stainless steel polymerization kettle equipped with mechanical stirrer was dried continuously at 130°C for 6h, vacuumized while hot and purged 3 times with N₂. To the polymerization kettle, 500mL of toluene was charged, and methylaluminoxane (6.5 mL, 10 mmol), 7.6mg (5µmol) of complex 71 were added. The reaction was carried out with stirring vigorously at 75°C for 20min while maintaining an ethylene pressure of 4.0 atm. The reaction solution was neutralized with a 10 wt% hydrochloric acid acidified ethanol solution to obtain polyethylene. The polymer was dried and weighed for the test of polymerization activity. The test data of weight average molecular weight, molecular weight distribution and polymerization activity of the obtained polymer are shown in Table 1.

### Example 13

complex 79: complex of formula (II), wherein M is Zr, L₁ is pentamethyl cyclopentadienyl, R₁₁, R₁₃ and R₁₅ are H, R₁₂ and R₁₄ are methyl, X is Cl, n=2, R₁ is tetrahydrofuranyl, m=1.

Under a nitrogen atmosphere, a compound of formula (III) (3.74g, 10mmol, R configuration) was dissolved in anhydrous diethyl ether (120mL), an n-butyl lithium solution (2.5M, 12mL, 30mmol) was added dropwise at room temperature, and the solution was stirred at room temperature for 4h. Tetrahydrofuran (120mL) was added, and the obtained black solution containing precipitate was further stirred for 1h. Di(3,5-dimethylphenyl)phosphine chloride (30mmol, 8.30g) was added at 0°C. The solution was stirred at room temperature for 1h, and then quenched with the addition of NH₄Cl aqueous solution (5mL). The organic phase was extracted with ethyl acetate, and the obtained organic phase was dried over anhydrous sodium sulfate, recrystallized with dichloromethane/hexane, to obtain a white crystalline compound. Methanol (100mL), 5mL of concentrated hydrochloric acid (37wt%) were added, and reacted under reflux for 16h. After the reaction as tracked using TLC was completed, the organic solvent was removed, and the product was dissolved in ethyl acetate, and neutralized with NaHCO₃ aqueous solution. The organic phase was extracted, dried over anhydrous MgSO₄, filtered, concentrated, and separated by column chromatography (dichloromethane as solvent) to obtain ligand L₄, with a yield of 58%. ¹H NMR (400 MHz, CDCl₃) δ: 2.28 (s, 24H), 5.43 (s, 2H), 6.96-7.05 (m, 12H), 7.17 (m, 2H), 7.24-7.29 (m, 4H), 7.43 (d, 2H), 7.65 (m, 2H). High resolution mass spectrometry test: theoretical calculation value: 766.31; test value: 767.32. ³¹P NMR (162 MHz, CDCl₃) δ =-15.4 (s).

Under a nitrogen atmosphere, the ligand L₄ (0.77g, 1mmol) was dissolved in tetrahydrofuran, excess NaH (0.072g, 3mmol) was added, the solution was stirred at room temperature for 10 h, and then NaH was removed by filtration. A solution of pentamethyl cyclopentadienyl zirconium trichloride (0.666g, 2mmol) in tetrahydrofuran was added dropwise, and reacted overnight at room temperature. The solvent was removed by suction, and the product was dissolved in dichloromethane (40mL). The solution was filtered to remove the filter cake, the filtrate was concentrated, and recrystallized with heptane to obtain a yellow complex 79, with a yield of 78%. Elemental analysis test C₈₀H₉₂Cl₄O₄P₂Zr₂: theoretical calculation value: C, 63.90; H, 6.17; test value: C, 64.94; H, 6.37.

A 1L stainless steel polymerization kettle equipped with mechanical stirrer was dried continuously at 130°C for 6h, vacuumized while hot and purged 3 times with N₂. To the polymerization kettle, 500mL of toluene was charged, and methylaluminoxane (6.5 mL, 10 mmol), 7.5mg (5µmol) of complex 79 were added. The reaction was carried out with stirring vigorously at 75°C for 20min while maintaining an ethylene pressure of 4.0 atm. The reaction solution was neutralized with a 10 wt% hydrochloric acid acidified ethanol solution to obtain polyethylene. The polymer was dried and weighed for the test of polymerization activity. The test data of weight average molecular weight, molecular weight distribution and polymerization activity of the obtained polymer are shown in Table 1.

### Comparative Example 1

A 1L stainless steel polymerization kettle equipped with mechanical stirrer was dried continuously at 130°C for 6h, vacuumized while hot and purged 3 times with N₂. To the polymerization kettle, 500mL of toluene was charged, and methylaluminoxane (6.5 mL, 10 mmol), 7.2mg (10µmol) of complex A (as to its synthesis process, please refer to the literature Dalton Trans., 2014, 43, 222-230) were added. The reaction was carried out with stirring vigorously at 75°C for 20min while maintaining an ethylene pressure of 4.0 atm. The reaction solution was neutralized with a 10 wt% hydrochloric acid acidified ethanol solution to obtain polyethylene. The polymer was dried and weighed for the test of polymerization activity. The test data of weight average molecular weight, molecular weight distribution and polymerization activity of the obtained polymer are shown in Table 1.

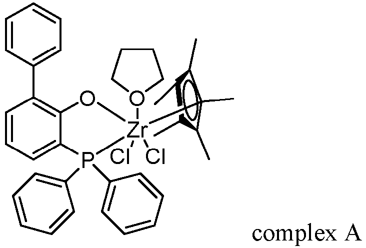

### Comparative Example 2

A 1L stainless steel polymerization kettle equipped with mechanical stirrer was dried continuously at 130°C for 6h, vacuumized while hot and purged 3 times with N₂. To the polymerization kettle, 500mL of toluene was charged, and methylaluminoxane (6.5 mL, 10 mmol), 5.2mg (10µmol) of complex B (as to its synthesis process, please refer to the literature JOURNAL OF POLYMER SCIENCE, PART A: POLYMER CHEMISTRY 2013, 51, 1585-1594) were added. The reaction was carried out with stirring vigorously at 30°C for 10min while maintaining an ethylene pressure of 4.0 atm. The reaction solution was neutralized with a 10 wt% hydrochloric acid acidified ethanol solution to obtain polyethylene. The polymer was dried and weighed for the test of polymerization activity. The test data of weight average molecular weight, molecular weight distribution and polymerization activity of the obtained polymer are shown in Table 1.

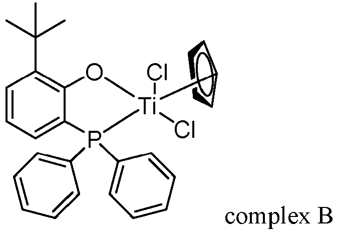

**Table 1**

| Example | Complex | Metal M in complex | Polymerization activity (g/molcat·h) | *M*_{w}×10⁻⁴ | *M*_{w}/*M*ₙ*.* | Comonomer content (mol%) |
|---|---|---|---|---|---|---|
| Example 1 | complex 43 | Zr | 2.53×10⁶ | 65.1 | 2.03 | - |
| Example 2 | complex 43 | Zr | 2.12×10⁶ | 36.7 | 2.32 | - |
| Example 3 | complex 43 | Zr | 8.62×10⁶ | 22.8 | 2.14 | 3.2 |
| Example 4 | complex 2 | Ti | 3.52×10⁵ | 10.7 | 2.62 | - |
| Example 5 | complex 2 | Ti | 4.80×10⁶ | 16.7 | 2.53 | 27.7 |
| Example 6 | complex 2 | Ti | 6.02×10⁵ | 11.4 | 2.72 | - |
| Example 7 | complex 2 | Ti | 7.14×10⁵ | 9.8 | 2.33 | 3.2 |
| Example 8 | complex 98 | Hf | 1.28×10⁶ | 132.2 | 2.02 | - |
| Example 9 | complex 98 | Hf | 1.35×10⁶ | 104.3 | 2.11 | 3.0 |
| Example 10 | complex 78 | Zr | 3.02×10⁶ | 48.2 | 1.90 | - |
| Example 11 | complex 36 | Ti | 4.24×10⁵ | 168.4 | 2.2 | - |
| Example 12 | complex 71 | Zr | 3.65×10⁶ | 41.7 | 1.96 | - |
| Example 13 | complex 79 | Zr | 3.87×10⁶ | 44.2 | 1.98 | - |
| Comparative Example 1 | complex A | Zr | 1.10×10⁶ | 32.7 | 2.42 | - |
| Comparative Example 2 | complex B | Ti | 1.82×10⁵ | 8.2 | 2.81 | - |

As can be seen from the data in Table 1, in the case where the complex contains the same metal and the polymerization conditions are similar, when the metal complex of the present invention is used as a primary catalyst, a higher polymerization activity is achieved, the obtained polymer has an obviously lower molecular weight distribution than that of the polymer obtained in the Comparative Examples, and also has a more excellent copolymerization performance; and the metal complex of the present invention still maintains a higher polymerization activity at a higher polymerization temperature.

The preferred embodiments of the present invention have been described above in detail, but the present invention is not limited thereto. Within the scope of the technical idea of the present invention, many simple modifications can be made to the technical solution of the present invention, including various technical features being combined in any other suitable way, and these simple modifications and combinations should also be regarded as the disclosure of the present invention, and all fall within the scope of the present invention.

## Claims

1. A phosphine-phenol half-metallocene complex, **characterized in that** it has a structural formula shown in formula (I), 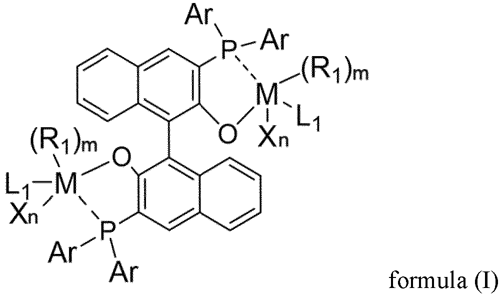
wherein, M is selected from Group IVB metals; Ar is selected from substituted or unsubstituted C6-C20 aryl; X is selected from halogen, C1-C10 hydrocarbyl, n is 1 or 2; L₁ is selected from substituted or unsubstituted cyclopentadienyl, substituted or unsubstituted indenyl, tetrahydroindenyl, substituted or unsubstituted fluorenyl; R₁ is OR₂₁R₂₂, wherein R₂₁ and R₂₂ are each independently selected from substituted or unsubstituted C1-C10 hydrocarbyl, and R₂₁, R₂₂ and O are interconnected to form a ring or ring system, m is 0 or 1,
preferably, C6-C20 aryl is selected from phenyl, 4-methyl phenyl, 4-ethyl phenyl, dimethyl phenyl, vinyl phenyl, anthryl, naphthyl, or biphenyl;
preferably, for substituted C6-C20 aryl, the substituent thereof is selected from H, halogen, hydroxy, substituted or unsubstituted alkoxy, substituted or unsubstituted C1-C20 hydrocarbyl; preferably, alkoxy is C1-C6 alkoxy;
preferably, for substituted alkoxy and substituted C1-C20 hydrocarbyl, the substituents thereof are selected from halogen, hydroxy, C1-C6 alkyl, halo-substituted C1-C6 alkyl, C1-C6 alkoxy and halo-substituted C1-C6 alkoxy;
preferably, the halo is selected from fluoro, chloro, bromo, or iodo;
preferably, C1-C10 hydrocarbyl is selected from C1-C8 hydrocarbyl, more preferably C1-C8 alkyl; and/or
preferably, C1-C20 hydrocarbyl is selected from C1-C6 alkyl;
preferably, for substituted cyclopentadienyl, substituted indenyl, substituted fluorenyl, the substituents are independently selected from C1-C6 alkyl or C6-C15 aryl.

2. The phosphine-phenol half-metallocene complex as claimed in claim 1, **characterized in that** it has a structural formula shown in formula (II), 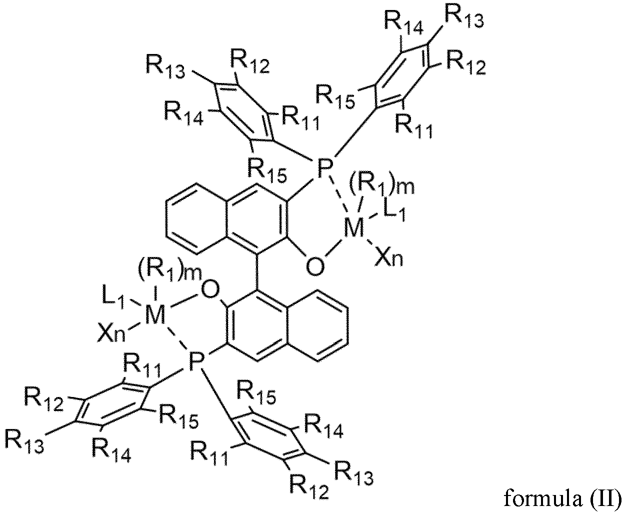 wherein, R₁₁-R₁₅ are each independently selected from H, halogen, hydroxy, substituted or unsubstituted alkoxy or substituted or unsubstituted C1-C20 hydrocarbyl; preferably, for substituted alkoxy and substituted C1-C20 hydrocarbyl, the substituents thereof are selected from halogen, hydroxy, C1-C6 alkyl, halo-substituted C1-C6 alkyl, C1-C6 alkoxy and halo-substituted C1-C6 alkoxy.

3. The phosphine-phenol half-metallocene complex as claimed in claim 1 or 2, **characterized in that**, M is selected from titanium, zirconium and hafnium.

4. The phosphine-phenol half-metallocene complex as claimed in claim 1 or 2, **characterized in that**, R₂₁ and R₂₂ are each independently selected from substituted or unsubstituted C1-C6 hydrocarbyl, and R₂₁, R₂₂ and O are interconnected to form a five- or six-membered ring.

5. The phosphine-phenol half-metallocene complex as claimed in claim 2, **characterized in that**, R₁₁-R₁₅ are each independently selected from H, halogen, hydroxy, substituted or unsubstituted alkoxy or substituted or unsubstituted C1-C10 alkyl and substituted or unsubstituted C6-C15 aryl; X is selected from halogen, C1-C8 hydrocarbyl;
preferably, for substituted alkoxy, substituted C1-C10 alkyl and substituted C6-C15 aryl, the substituents are independently selected from halogen, hydroxy, C1-C6 alkyl, halo-substituted C1-C6 alkyl, C1-C6 alkoxy and halo-substituted C1-C6 alkoxy;
preferably, the C1-C6 alkyl is selected from methyl, ethyl, n-propyl, isopropyl, n-butyl, isobutyl, n-pentyl, isopentyl, n-hexyl, isohexyl and 3,3-dimethyl butyl;
preferably, the C1-C6 alkoxy is selected from methoxy, ethoxy, n-propoxy, isopropoxy, n-butoxy, isobutoxy, n-pentyloxy, isopentyloxy, n-hexyloxy, isohexyloxy and 3,3-dimethyl butoxy;
preferably, the halogen is selected from fluorine, chlorine, bromine and iodine.

6. The phosphine-phenol half-metallocene complex as claimed in any of claims 1-4, **characterized in that** it is selected from a group consisting of the following complexes,
complex 1: complex of formula (II), wherein M is Ti, L₁ is cyclopentadienyl, R₁₁-R₁₅ are H, X is Cl, n=2, m=0;
complex 2: complex of formula (II), wherein M is Ti, L₁ is pentamethyl cyclopentadienyl, R₁₁-R₁₅ are H, X is Cl, n=2, m=0;
complex 3: complex of formula (II), wherein M is Ti, L₁ is 1-methyl-2,4-cyclopentadienyl, R₁₁-R₁₅ are H, X is Cl, n=2, m=0;
complex 4: complex of formula (II), wherein M is Ti, L₁ is 1-n-butyl-2,4-cyclopentadienyl, R₁₁-R₁₅ are H, X is Cl, n=2, m=0;
complex 5: complex of formula (II), wherein M is Ti, L₁ is 1-tert-butyl-2,4-cyclopentadienyl, R₁₁-R₁₅ are H, X is Cl, n=2, m=0;
complex 6: complex of formula (II), wherein M is Ti, L₁ is indenyl, R₁₁-R₁₅ are H, X is Cl, n=2, m=0;
complex 7: complex of formula (II), wherein M is Ti, L₁ is tetrahydroindenyl, R₁₁-R₁₅ are H, X is Cl, n=2, m=0;
complex 8: complex of formula (II), wherein M is Ti, L₁ is fluorenyl, R₁₁-R₁₅ are H, X is Cl, n=2, m=0;
complex 9: complex of formula (II), wherein M is Ti, L₁ is phenyl-indenyl, R₁₁-R₁₅ are H, X is Cl, n=2, m=0;
complex 10: complex of formula (II), wherein M is Ti, L₁ is cyclopentadienyl, R₁₁-R₁₅ are H, X is methyl, n=2, m=0;
complex 11: complex of formula (II), wherein M is Ti, L₁ is pentamethyl cyclopentadienyl, R₁₁-R₁₅ are H, X is methyl, n=2, m=0;
complex 12: complex of formula (II), wherein M is Ti, L₁=1-methyl-2,4-cyclopentadienyl, R₁₁-R₁₅ are H, X is methyl, n=2, m=0;
complex 13: complex of formula (II), wherein M is Ti, L₁ is 1-n-butyl-2,4-cyclopentadienyl, R₁₁-R₁₅ are H, X is methyl, n=2, m=0;
complex 14: complex of formula (II), wherein M is Ti, L₁ is 1-tert-butyl-2,4-cyclopentadienyl, R₁₁-R₁₅ are H, X is methyl, n=2, m=0;
complex 15: complex of formula (II), wherein M is Ti, L₁ is indenyl, R₁₁-R₁₅ are H, X is methyl, n=2, m=0;
complex 16: complex of formula (II), wherein M is Ti, L₁ is tetrahydroindenyl, R₁₁-R₁₅ are **H, X** is methyl, n=2, m=0;
complex 17: complex of formula (II), wherein M is Ti, L₁ is fluorenyl, R₁₁-R₁₅ are **H,** X is methyl, n=2, m=0;
complex 18: complex of formula (II), wherein M is Ti, L₁ is phenyl-indenyl, R₁₁-R₁₅ are **H,** X is methyl, n=2, m=0;
complex 19: complex of formula (II), wherein M is Ti, L₁ is cyclopentadienyl, R₁₁-R₁₅ are **H,** X is -CH₂C₆H₅, n=2, m=0;
complex 20: complex of formula (II), wherein M is Ti, L₁ is pentamethyl cyclopentadienyl, R₁₁-R₁₅ are **H,** X is -CH₂C₆H₅, n=2, m=0;
complex 21: complex of formula (II), wherein M is Ti, L₁ is 1-methyl-2,4-cyclopentadienyl, R₁₁-R₁₅ are H, X is -CH₂C₆H₅, n=2, m=0;
complex 22: complex of formula (II), wherein M is Ti, L₁ is 1-n-butyl-2,4-cyclopentadienyl, R₁₁-R₁₅ are H, X is -CH₂C₆H₅, n=2, m=0;
complex 23: complex of formula (II), wherein M is Ti, L₁ is 1-tert-butyl-2,4-cyclopentadienyl, R₁₁-R₁₅ are H, X is -CH₂C₆H₅, n=2, m=0;
complex 24: complex of formula (II), wherein M is Ti, L₁ is indenyl, R₁₁-R₁₅ are H, X is -CH₂C₆H₅, n=2, m=0;
complex 25: complex of formula (II), wherein M is Ti, L₁ is tetrahydroindenyl, R₁₁-R₁₅ are H, X is -CH₂C₆H₅, n=2, m=0;
complex 26: complex of formula (II), wherein M is Ti, L₁ is fluorenyl, R₁₁-R₁₅ are H, X is - CH₂C₆H₅, n=2, m=0;
complex 27: complex of formula (II), wherein M is Ti, L₁ is phenyl-indenyl, R₁₁-R₁₅ are H, X is - CH₂C₆H₅, n=2, m=0;
complex 28: complex of formula (II), wherein M is Ti, L₁ is cyclopentadienyl, R₁₁, R₁₂, R₁₄ and R₁₅ are H, R₁₃ is -CF₃, X is Cl, n=2, m=0;
complex 29: complex of formula (II), wherein M is Ti, L₁ is cyclopentadienyl, R₁₁, R₁₃, R₁₄ and R₁₅ are H, R₁₂ is -CF₃, X is Cl, n=2, m=0;
complex 30: complex of formula (II), wherein M is Ti, L₁ is cyclopentadienyl, R₁₁, R₁₂, R₁₄ and R₁₅ are H, R₁₃ is methoxy, X is Cl, n=2, m=0;
complex 31: complex of formula (II), wherein M is Ti, L₁ is cyclopentadienyl, R₁₁, R₁₃ and R₁₅ are H, R₁₂ and R₁₄ are methyl, X is Cl, n=2, m=0;
complex 32: complex of formula (II), wherein M is Ti, L₁ is pentamethyl cyclopentadienyl, R₁₁, R₁₂, R₁₄ and R₁₅ are H, R₁₃ is -CF₃, X is Cl, n=2, m=0;
complex 33: complex of formula (II), wherein M is Ti, L₁ is pentamethyl cyclopentadienyl, R₁₁, R₁₃ and R₁₅ are H, R₁₂ and R₁₄ are -CF₃, X is Cl, n=2, m=0;
complex 34: complex of formula (II), wherein M is Ti, L₁ is pentamethyl cyclopentadienyl, R₁₁, R₁₂, R₁₄ and R₁₅ are H, R₁₃ is methoxy, X is Cl, n=2, m=0;
complex 35: complex of formula (II), wherein M is Ti, L₁ is indenyl, R₁₁, R₁₂, R₁₄ and R₁₅ are H, R₁₃ is -CF₃, X is Cl, n=2, m=0;
complex 36: complex of formula (II), wherein M is Ti, L₁ is indenyl, R₁₁, R₁₃ and R₁₅ are H, R₁₂ and R₁₄ are -CF₃, X is Cl, n=2, m=0;
complex 37: complex of formula (II), wherein M is Ti, L₁ is indenyl, R₁₁, R₁₂, R₁₄ and R₁₅ are H, R₁₃ is methoxy, X is Cl, n=2, m=0;
complex 38: complex of formula (II), wherein M is Ti, L₁ is indenyl, R₁₁, R₁₃ and R₁₅ are H, R₁₂ and R₁₄ are methyl, X is Cl, n=2, m=0;
complex 39: complex of formula (II), wherein M is Ti, L₁ is fluorenyl, R₁₁, R₁₂, R₁₄ and R₁₅ are H, R₁₃ is -CF₃, X is Cl, n=2, m=0;
complex 40: complex of formula (II), wherein M is Ti, L₁ is fluorenyl, R₁₁, R₁₃ and R₁₅ are H, R₁₂ and R₁₄ are -CF₃, X is Cl, n=2, m=0;
complex 41: complex of formula (II), wherein M is Ti, L₁ is fluorenyl, R₁₁, R₁₂, R₁₄ and R₁₅ are H, R₁₃ is methoxy, X is Cl, n=2, m=0;
complex 42: complex of formula (II), wherein M is Zr, L₁ is cyclopentadienyl, R₁₁-R₁₅ are H, X is Cl, n=2, R₁ is tetrahydrofuranyl, m=1;
complex 43: complex of formula (II), wherein M is Zr, L₁ is pentamethyl cyclopentadienyl, R₁₁-R₁₅ are H, X is Cl, n=2, R₁ is tetrahydrofuranyl, m=1;
complex 44: complex of formula (II), wherein M is Zr, L₁ is 1-methyl-2,4-cyclopentadienyl, R₁₁-R₁₅ are H, X is Cl, n=2, R₁ is tetrahydrofuranyl, m=1;
complex 45: complex of formula (II), wherein M is Zr, L₁ is 1-n-butyl-2,4-cyclopentadienyl, R₁₁-R₁₅ are H, X is Cl, n=2, R₁ is tetrahydrofuranyl, m=1;
complex 46: complex of formula (II), wherein M is Zr, L₁ is 1-tert-butyl-2,4-cyclopentadienyl, R₁₁-R₁₅ are H, X is Cl, n=2, R₁ is tetrahydrofuranyl, m=1;
complex 47: complex of formula (II), wherein M is Zr, L₁ is indenyl, R₁₁-R₁₅ are H, X is Cl, n=2, R₁ is tetrahydrofuranyl, m=1;
complex 48: complex of formula (II), wherein M is Zr, L₁ is tetrahydroindenyl, R₁₁-R₁₅ are H, X is Cl, n=2, R₁ is tetrahydrofuranyl, m=1;
complex 49: complex of formula (II), wherein M is Zr, L₁ is fluorenyl, R₁₁-R₁₅ are H, X is Cl, n=2, R₁ is tetrahydrofuranyl, m=1;
complex 50: complex of formula (II), wherein M is Zr, L₁ is phenyl-indenyl, R₁₁-R₁₅ are H, X is Cl, n=2, R₁ is tetrahydrofuranyl, m=1;
complex 51: complex of formula (II), wherein M is Zr, L₁ is cyclopentadienyl, R₁₁-R₁₅ are H, X is methyl, n=2, R₁ is tetrahydrofuranyl, m=1;
complex 52: complex of formula (II), wherein M is Zr, L₁ is pentamethyl cyclopentadienyl, R₁₁-R₁₅ are H, X is methyl, n=2, R₁ is tetrahydrofuranyl, m=1;
complex 53: complex of formula (II), wherein M is Zr, L₁ is 1-methyl-2,4-cyclopentadienyl, R₁₁-R₁₅ are H, X is methyl, n=2, R₁ is tetrahydrofuranyl, m=1;
complex 54: complex of formula (II), wherein M is Zr, L₁ is 1-n-butyl-2,4-cyclopentadienyl, R₁₁-R₁₅ are H, X is methyl, n=2, R₁ is tetrahydrofuranyl, m=1;
complex 55: complex of formula (II), wherein M is Zr, L₁ is 1-tert-butyl-2,4-cyclopentadienyl, R₁₁-R₁₅ are H, X is methyl, n=2, R₁ is tetrahydrofuranyl, m=1;
complex 56: complex of formula (II), wherein M is Zr, L₁ is indenyl, R₁₁-R₁₅ are H, X is methyl, n=2, R₁ is tetrahydrofuranyl, m=1;
complex 57: complex of formula (II), wherein M is Zr, L₁ is tetrahydroindenyl, R₁₁-R₁₅ are H, X is methyl, n=2, R₁ is tetrahydrofuranyl, m=1;
complex 58: complex of formula (II), wherein M is Zr, L₁ is fluorenyl, R₁₁-R₁₅ are H, X is methyl, n=2, R₁ is tetrahydrofuranyl, m=1;
complex 59: complex of formula (II), wherein M is Zr, L₁ is phenyl-indenyl, R₁₁-R₁₅ are H, X is methyl, n=2, R₁ is tetrahydrofuranyl, m=1;
complex 60: complex of formula (II), wherein M is Zr, L₁ is cyclopentadienyl, R₁₁-R₁₅ are H, X is -CH₂C₆H₅, n=2, R₁ is tetrahydrofuranyl, m=1;
complex 61: complex of formula (II), wherein M is Zr, L₁ is pentamethyl cyclopentadienyl, R₁₁-R₁₅ are H, X is -CH₂C₆H₅, n=2, R₁ is tetrahydrofuranyl, m=1;
complex 62: complex of formula (II), wherein M is Zr, L₁ is 1-methyl-2,4-cyclopentadienyl, R₁₁-R₁₅ are H, X is -CH₂C₆H₅, n=2, R₁ is tetrahydrofuranyl, m=1;
complex 63: complex of formula (II), wherein M is Zr, L₁ is 1-n-butyl-2,4-cyclopentadienyl, R₁₁-R₁₅ are H, X is -CH₂C₆H₅, n=2, R₁ is tetrahydrofuranyl, m=1;
complex 64: complex of formula (II), wherein M is Zr, L₁ is 1-tert-butyl-2,4-cyclopentadienyl, R₁₁-R₁₅ are H, X is -CH₂C₆H₅, n=1, R₁ is tetrahydrofuranyl, m=1;
complex 65: complex of formula (II), wherein M is Zr, L₁ is indenyl, R₁₁-R₁₅ are H, X is -CH₂C₆H₅, n=2, R₁ is tetrahydrofuranyl, m=1;
complex 66: complex of formula (II), wherein M is Zr, L₁ is tetrahydroindenyl, R₁₁-R₁₅ are H, X is -CH₂C₆H₅, n=2, R₁ is tetrahydrofuranyl, m=1;
complex 67: complex of formula (II), wherein M is Zr, L₁ is fluorenyl, R₁₁-R₁₅ are H, X is - CH₂C₆H₅, n=2, R₁ is tetrahydrofuranyl, m=1;
complex 68: complex of formula (II), wherein M is Zr, L₁ is phenyl-indenyl, R₁₁-R₁₅ are H, X is - CH₂C₆H₅, n=2, R₁ is tetrahydrofuranyl, m=1;
complex 69: complex of formula (II), wherein M is Zr, L₁ is cyclopentadienyl, R₁₁, R₁₂, R₁₄ and R₁₅ are H, R₁₃ is -CF₃, X is Cl, n=2, R₁ is tetrahydrofuranyl, m=1;
complex 70: complex of formula (II), wherein M is Zr, L₁ is cyclopentadienyl, R₁₁, R₁₃, R₁₄ and R₁₅ are H, R₁₂ is -CF₃, X is Cl, n=2, R₁ is tetrahydrofuranyl, m=1;
complex 71: complex of formula (II), wherein M is Zr, L₁ is pentamethyl cyclopentadienyl, R₁₁, R₁₂, R₁₄ and R₁₅ are H, R₁₃ is methoxy, X is Cl, n=2, R₁ is tetrahydrofuranyl, m=1;
complex 72: complex of formula (II), wherein M is Zr, L₁ is cyclopentadienyl, R₁₁, R₁₂, R₁₄ and R₁₅ are H, R₁₃ is methoxy, X is Cl, n=2, R₁ is tetrahydrofuranyl, m=1;
complex 73: complex of formula (II), wherein M is Zr, L₁ is cyclopentadienyl, R₁₁, R₁₂, R₁₄ and R₁₅ are H, R₁₃ is methoxy, X is methyl, n=2, R₁ is tetrahydrofuranyl, m=1;
complex 74: complex of formula (II), wherein M is Zr, L₁ is cyclopentadienyl, R₁₁, R₁₂, R₁₄ and R₁₅ are H, R₁₃ is methoxy, X is -CH₂C₆H₅, n=2, R₁ is tetrahydrofuranyl, m=1;
complex 75: complex of formula (II), wherein M is Zr, L₁ is pentamethyl cyclopentadienyl, R₁₁, R₁₂, R₁₄ and R₁₅ are H, R₁₃ is -CF₃, X is Cl, n=2, R₁ is tetrahydrofuranyl, m=1;
complex 76: complex of formula (II), wherein M is Zr, L₁ is pentamethyl cyclopentadienyl, R₁₁, R₁₂, R₁₄ and R₁₅ are H, R₁₃ is -CF₃, X is methyl, n=2, R₁ is tetrahydrofuranyl, m=1;
complex 77: complex of formula (II), wherein M is Zr, L₁ is pentamethyl cyclopentadienyl, R₁₁, R₁₂, R₁₄ and R₁₅ are H, R₁₃ is -CF₃, X is -CH₂C₆H₅, n=2, R₁ is tetrahydrofuranyl, m=1;
complex 78: complex of formula (II), wherein M is Zr, L₁ is pentamethyl cyclopentadienyl, R₁₁, R₁₃ and R₁₅ are H, R₁₂ and R₁₄ are -CF₃, X is Cl, n=2, R₁ is tetrahydrofuranyl, m=1;
complex 79: complex of formula (II), wherein M is Zr, L₁ is pentamethyl cyclopentadienyl, R₁₁, R₁₃ and R₁₅ are H, R₁₂ and R₁₄ are methyl, X is Cl, n=2, R₁ is tetrahydrofuranyl, m=1;
complex 80: complex of formula (II), wherein M is Zr, L₁ is pentamethyl cyclopentadienyl, R₁₁, R₁₃ and R₁₅ are H, R₁₂ and R₁₄ are -CF₃, X is methyl, n=2, R₁ is tetrahydrofuranyl, m=1;
complex 81: complex of formula (II), wherein M is Zr, L₁ is pentamethyl cyclopentadienyl, R₁₁, R₁₃ and R₁₅ are H, R₁₂ and R₁₄ are -CF₃, X is -CH₂C₆H₅, n=2, R₁ is tetrahydrofuranyl, m=1;
complex 82: complex of formula (II), wherein M is Zr, L₁ is pentamethyl cyclopentadienyl, R₁₁, R₁₂, R₁₄ and R₁₅ are H, R₁₃ is methoxy, X is Cl, n=2, R₁ is 2-methyl tetrahydrofuranyl, m=1;
complex 83: complex of formula (II), wherein M is Zr, L₁ is indenyl, R₁₁, R₁₂, R₁₄ and R₁₅ are H, R₁₃ is -CF₃, X is Cl, n=2, R₁ is tetrahydrofuranyl, m=1;
complex 84: complex of formula (II), wherein M is Zr, L₁ is indenyl, R₁₁, R₁₂, R₁₄ and R₁₅ are H, R₁₃ is -CF₃, X is methyl, n=2, R₁ is tetrahydrofuranyl, m=1;
complex 85: complex of formula (II), wherein M is Zr, L₁ is indenyl, R₁₁, R₁₂, R₁₄ and R₁₅ are H, R₁₃ is -CF₃, X is -CH₂C₆H₅, n=2, R₁ is tetrahydrofuranyl, m=1;
complex 86: complex of formula (II), wherein M is Zr, L₁ is indenyl, R₁₁, R₁₃ and R₁₅ are H, R₁₂ and R₁₄ are -CF₃, X is Cl, n=2, R₁ is tetrahydrofuranyl, m=1;
complex 87: complex of formula (II), wherein M is Zr, L₁ is indenyl, R₁₁, R₁₃ and R₁₅ are H, R₁₂ and R₁₄ are methyl, X is Cl, n=2, R₁ is tetrahydrofuranyl, m=1;
complex 88: complex of formula (II), wherein M is Zr, L₁ is indenyl, R₁₁, R₁₃ and R₁₅ are H, R₁₂ and R₁₄ are -CF₃, X is methyl, n=2, R₁ is tetrahydrofuranyl, m=1;
complex 89: complex of formula (II), wherein M is Zr, L₁ is indenyl, R₁₁, R₁₃ and R₁₅ are H, R₁₂ and R₁₄ are -CF₃, X is -CH₂C₆H₅, n=2, R₁ is tetrahydrofuranyl, m=1;
complex 90: complex of formula (II), wherein M is Zr, L₁ is indenyl, R₁₁, R₁₂, R₁₄ and R₁₅ are H, R₁₃ is methoxy, X is Cl, n=2, R₁ is tetrahydrofuranyl, m=1;
complex 91: complex of formula (II), wherein M is Zr, L₁ is fluorenyl, R₁₁, R₁₂, R₁₄ and R₁₅ are H, R₁₃ is -CF₃, X is Cl, n=2, R₁ is tetrahydrofuranyl, m=1;
complex 92: complex of formula (II), wherein M is Zr, L₁ is fluorenyl, R₁₁, R₁₃ and R₁₅ are H, R₁₂ and R₁₄ are -CF₃, X is Cl, n=2, R₁ is tetrahydrofuranyl, m=1;
complex 93: complex of formula (II), wherein M is Zr, L₁ is fluorenyl, R₁₁, R₁₃ and R₁₅ are H, R₁₂ and R₁₄ are methyl, X is Cl, n=2, R₁ is tetrahydrofuranyl, m=1;
complex 94: complex of formula (II), wherein M is Zr, L₁ is fluorenyl, R₁₁, R₁₃ and R₁₅ are H, R₁₂ and R₁₄ are -CF₃, X is methyl, n=2, R₁ is tetrahydrofuranyl, m=1;
complex 95: complex of formula (II), wherein M is Zr, L₁ is fluorenyl, R₁₁, R₁₃ and R₁₅ are H, R₁₂ and R₁₄ are -CF₃, X is -CH₂C₆H₅, n=2, R₁ is tetrahydrofuranyl, m=1;
complex 96: complex of formula (II), wherein M is Zr, L₁ is fluorenyl, R₁₁, R₁₂, R₁₄ and R₁₅ are H, R₁₃ is methoxy, X is Cl, n=2, R₁ is tetrahydrofuranyl, m=1;
complex 97: complex of formula (II), wherein M is Hf, L₁ is cyclopentadienyl, R₁₁-R₁₅ are H, X is Cl, n=2, m=0;
complex 98: complex of formula (II), wherein M is Hf, L₁ is pentamethyl cyclopentadienyl, R₁₁-R₁₅ are H, X is Cl, n=2, m=0;
complex 99: complex of formula (II), wherein M is Hf, L₁ is 1-methyl-2,4-cyclopentadienyl, R₁₁-R₁₅ are H, X is Cl, n=2, m=0;
complex 100: complex of formula (II), wherein M is Hf, L₁ is 1-n-butyl-2,4-cyclopentadienyl, R₁₁-R₁₅ are H, X is Cl, n=2, m=0;
complex 101: complex of formula (II), wherein M is Hf, L₁ is 1-tert-butyl-2,4-cyclopentadienyl, R₁₁-R₁₅ are H, X is Cl, n=2, m=0;
complex 102: complex of formula (II), wherein M is Hf, L₁ is indenyl, R₁₁-R₁₅ are H, X is Cl, n=2, m=0;
complex 103: complex of formula (II), wherein M is Hf, L₁ is fluorenyl, R₁₁-R₁₅ are H, X is Cl, n=2, m=0;
complex 104: complex of formula (II), wherein M is Hf, L₁ is phenyl-indenyl, R₁₁-R₁₅ are H, X is Cl, n=2, m=0;
complex 105: complex of formula (II), wherein M is Hf, L₁ is cyclopentadienyl, R₁₁, R₁₂, R₁₄ and R₁₅ are H, R₁₃ is -CF₃, X is Cl, n=2, m=0;
complex 106: complex of formula (II), wherein M is Hf, L₁ is cyclopentadienyl, R₁₁, R₁₃, R₁₄ and R₁₅ are H, R₁₂ is -CF₃, X is Cl, n=2, m=0;
complex 107: complex of formula (II), wherein M is Hf, L₁ is cyclopentadienyl, R₁₁, R₁₂, R₁₄ and R₁₅ are H, R₁₃ is methoxy, X is Cl, n=2, m=0;
complex 108: complex of formula (II), wherein M is Hf, L₁ is pentamethyl cyclopentadienyl, R₁₁, R₁₂, R₁₄ and R₁₅ are H, R₁₃ is -CF₃, X is Cl, n=2, m=0;
complex 109: complex of formula (II), wherein M is Hf, L₁ is pentamethyl cyclopentadienyl, R₁₁, R₁₃ and R₁₅ are H, R₁₂ and R₁₄ are -CF₃, X is Cl, n=2, m=0;
complex 110: complex of formula (II), wherein M is Hf, L₁ is pentamethyl cyclopentadienyl, R₁₁, R₁₂, R₁₄ and R₁₅ are H, R₁₃ is methoxy, X is Cl, n=2, m=0;
complex 111: complex of formula (II), wherein M is Hf, L₁ is pentamethyl cyclopentadienyl, R₁₁, R₁₃ and R₁₅ are H, R₁₂ and R₁₄ are methyl, X is Cl, n=2, m=0;
complex 112: complex of formula (II), wherein M is Hf, L₁ is indenyl, R₁₁, R₁₂, R₁₄ and R₁₅ are H, R₁₃ is -CF₃, X is Cl, n=2, m=0;
complex 113: complex of formula (II), wherein M is Hf, L₁ is indenyl, R₁₁, R₁₃ and R₁₅ are H, R₁₂ and R₁₄ are -CF₃, X is Cl, n=2, m=0;
complex 114: complex of formula (II), wherein M is Hf, L₁ is indenyl, R₁₁, R₁₂, R₁₄ and R₁₅ are H, R₁₃ is methoxy, X is Cl, n=2, m=0;
complex 115: complex of formula (II), wherein M is Hf, L₁ is indenyl, R₁₁, R₁₃ and R₁₅ are H, R₁₂ and R₁₄ are methyl, X is Cl, n=2, m=0;
complex 116: complex of formula (II), wherein M is Hf, L₁ is fluorenyl, R₁₁, R₁₂, R₁₄ and R₁₅ are H, R₁₃ is -CF₃, X is Cl, n=2, m=0;
complex 117: complex of formula (II), wherein M is Hf, L₁ is fluorenyl, R₁₁, R₁₃ and R₁₅ are H, R₁₂ and R₁₄ are -CF₃, X is Cl, n=2, m=0;
complex 118: complex of formula (II), wherein M is Hf, L₁ is fluorenyl, R₁₁, R₁₂, R₁₄ and R₁₅ are H, R₁₃ is methoxy, X is Cl, n=2, m=0.

7. A method for preparing the phosphine-phenol half-metallocene complex as claimed in any of claims 1-6, **characterized in that** the method comprises:
(1) reacting a compound of formula (III) with a compound of formula (IV), to obtain a ligand of formula (V);
(2) reacting the ligand with a hydrogen abstracting agent, and then reacting with an M metal compound, wherein, the metal M in the M metal compound is selected from Group IVB metals, the M metal compound contains at least one of substituted or unsubstituted cyclopentadienyl, substituted or unsubstituted indenyl, tetrahydroindenyl and substituted or unsubstituted fluorenyl; 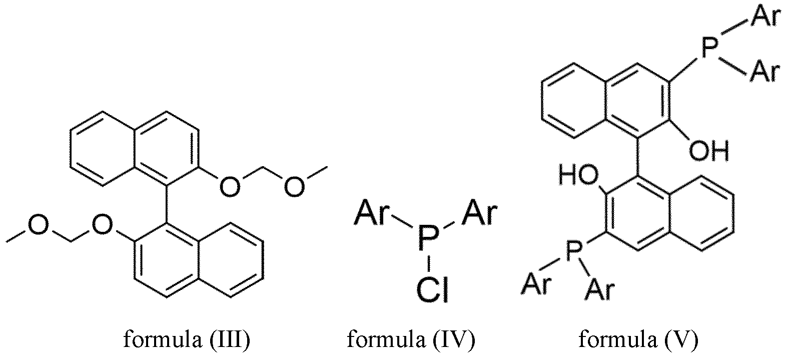 wherein, the definition of Ar is the same as that in claims 1, 2 and 6.

8. The method as claimed in claim 7, **characterized in that**, the M metal compound is selected from at least one of cyclopentadienyl titanium trichloride, pentamethyl cyclopentadienyl titanium trichloride, methyl-cyclopentadienyl titanium trichloride, n-butyl-cyclopentadienyl titanium trichloride, tert-butyl-cyclopentadienyl titanium trichloride, indenyl titanium trichloride, fluorenyl titanium trichloride, butyl-indenyl-titanium trichloride, 1-methyl-indenyl titanium trichloride, 2-methyl-indenyl titanium trichloride, 1-phenyl-indenyl-titanium trichloride, cyclopentadienyl zirconium trichloride, pentamethyl cyclopentadienyl zirconium trichloride, methyl-cyclopentadienyl zirconium trichloride, 1,3-dimethyl-cyclopentadienyl-zirconium trichloride, 1,2,4-trimethyl-cyclopentadienyl-zirconium trichloride, n-butyl-cyclopentadienyl zirconium trichloride, tert-butyl-cyclopentadienyl zirconium trichloride, indenyl zirconium trichloride, fluorenyl zirconium trichloride, butyl-indenyl-zirconium trichloride, 1-methyl-indenyl zirconium trichloride, 2-methyl-indenyl zirconium trichloride, 1-phenyl-indenyl-zirconium trichloride, cyclopentadienyl-1,2-dimethoxy-ethyl-zirconium trichloride, cyclopentadienyl hafnium trichloride, pentamethyl cyclopentadienyl hafnium trichloride, methyl-cyclopentadienyl hafnium trichloride, 1,2,3,4-tetramethyl-cyclopentadienyl-hafnium trichloride, n-butyl-cyclopentadienyl hafnium trichloride, tert-butyl-cyclopentadienyl hafnium trichloride, isobutyl-cyclopentadienyl hafnium trichloride, indenyl hafnium trichloride, fluorenyl hafnium trichloride, trihydro-indenyl-hafnium trichloride and cyclopentadienyl-1,2-dimethoxy-ethyl-hafnium trichloride.

9. The method as claimed in claim 7, **characterized in that**, the hydrogen abstracting agent is selected from at least one of NaH, KH, n-butyl lithium and methyl lithium.

10. Use of the phosphine-phenol half-metallocene complex as claimed in any of claims 1-6 in olefin polymerization.

11. An olefin polymerization catalyst, **characterized in that** it comprises the phosphine-phenol half-metallocene complex as claimed in any of claims 1-6 and a cocatalyst.

12. The olefin polymerization catalyst as claimed in claim 11, **characterized in that**, the cocatalyst is an organoaluminum compound and/or an organoboron compound;
preferably, the organoaluminum compound is selected from one or more of alkylaluminoxane, alkyl aluminum and alkyl aluminum halide;
preferably, the organoboron compound is selected from one or more of organoboron and organoborate.

13. An olefin polymerization method, **characterized in that** it comprises carrying out olefin polymerization reaction in the presence of the olefin polymerization catalyst as claimed in claim 11 or 12;
preferably, the olefin polymerization reaction may have a temperature of -78°C~200°C, preferably -20°C~150°C, and a pressure of 0.01~10MPa, preferably 0.01~5MPa.
